(19) Europäisches Patentamt
European Patent Office
Office européen des brevets

(11) **EP 2 376 884 B1**

(12) **EUROPEAN PATENT SPECIFICATION**

(45) Date of publication and mention of the grant of the patent:
**13.05.2015 Bulletin 2015/20**

(21) Application number: **09805946.2**

(22) Date of filing: **22.12.2009**

(51) Int Cl.:
***G01K 17/10*** *(2006.01)*

(86) International application number:
**PCT/IB2009/055912**

(87) International publication number:
**WO 2010/073220 (01.07.2010 Gazette 2010/26)**

(54) **HEAT METERING FOR CENTRAL THERMAL ENERGY INSTALLATION**

WÄRMEZÄHLUNG FÜR EINE ZENTRALE THERMISCHE ENERGIEINSTALLATION

COMPTAGE DE CHALEUR POUR INSTALLATION D'ENERGIE THERMIQUE CENTRALE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **22.12.2008 IT TO20080961**

(43) Date of publication of application:
**19.10.2011 Bulletin 2011/42**

(73) Proprietor: **Ingenia S.r.l.**
**10139 Torino (TO) (IT)**

(72) Inventors:
• **ARESTA, Alessio**
**I-72023 Mesagne (Brindisi) (IT)**
• **BARI, Federico**
**I-10121 Torino (IT)**
• **FRONTERRE', Michele**
**I-10141 Torino (IT)**
• **GRECO, Cosimo**
**I-10135 Torino (IT)**
• **MALAN, Stefano**
**I-10138 Torino (IT)**
• **MASOERO, Marco**
**I-10123 Torino (IT)**
• **VANDONI, Giorgio**
**I-10096 Collegno (Torino) (IT)**

(74) Representative: **Deambrogi, Edgardo et al**
**Jacobacci & Partners S.p.A.**
**Corso Emilia 8**
**10152 Torino (IT)**

(56) References cited:
**WO-A1-03/060448     FR-A1- 2 503 863**
**US-A- 4 509 679**

**Description**

The present invention relates to a system and a method for estimating the thermal energy exchanged between a plurality of heat exchangers of a central installation for generating and supplying thermal energy and a user complex.

In the prior art there are heat meters or measuring devices, also called direct heat meters, direct heating cost meters or therm meters, which in all cases require direct instantaneous measurements of the flow rate of the heat carrier fluid through each heating unit (or group of heating units) and of the temperature difference of the same fluid between the inlet and outlet of the heating unit (or group). These metering devices are therefore made up of the following components:

- two temperature sensors
- a flow rate sensor
- an electronic system for treating and sampling the signals from the three sensors and processing these
- a memory for storing the heat measurement
- a measurement display component, and
- if necessary, a component for transmitting the measured data.

The data received from the sensors (one flow rate sensor and two temperature sensors) are collected and stored by the electronic system of the heat meter and are then integrated with respect to time to obtain their energy data element This data element can be displayed on a display unit of the device, if present, and/or can be saved to its internal memory and/or sent to a generic remote control unit This type of heat metering device is economically advantageous only for heating installations having what is known as a "horizontal", "ring" or "area" supply of the heat carrier fluid.

This type of system requires an internal supply ring in each accommodation unit (or a limited number of rings) which serves all the heating units of the accommodation unit and which is connected to a single branching point from the main supply. In this case, the energy supplied by all the heating units of a single accommodation unit can be metered by a single *direct meter* for each internal ring of the accommodation unit. Similarly, the temperature can be regulated in this case by controlling the flow of the heat carrier fluid, by interposing a solenoid valve unit for a supply ring in the proximity of the branch from the main supply.

On the other hand, if the supply systems are of the *riser* or *vertical* type, in which each heating unit of a single accommodation unit is connected to a different pipe of the main supply which runs vertically through the whole building, the *direct heat metering* system is expensive in economic terms, because each heating unit requires a separate heat meter and therefore a separate group of sensors (two temperature sensors and one flow rate sensor) with their electronic system. This latter solution would therefore require highly invasive installation work, would entail cost increases proportional to the number of heating units, and would have a marked effect on the appearance of the accommodation unit. A further drawback arises from the fact that the overall dimensions of the flow rate sensor exceed the space available between the heating unit and the wall in which the heat carrier fluid delivery and return pipes are embedded; moreover, the flow rate sensor requires additional upstream and downstream straight pipe runs to limit the development of turbulence in the fluid which would degrade the accuracy of measurement. For physical reasons, therefore, the flow rate sensor cannot generally be installed at each heating unit. Furthermore, depending on the physical principle used by any given flow rate sensor, it may have other drawbacks. For example, the performance of mechanical flow rate sensors degrades over time if the fluid has a high content of suspended impurities, which is indeed the case in fluids used in heating installations. Other types of flow rate sensor such as electromagnetic or ultrasonic sensors require too much energy for their power supply and are too expensive. Consequently, although direct heat meters are ideal devices for measuring transferred heat, they have never been used in the past for metering the heat exchanged between a riser-type central heating system and its users.

Another type of system for metering the consumption of users served by central heating or cooling installations uses heat cost allocators. Heat cost allocators are devices which have existed for decades and were designed to solve the problem of metering heat for vertical *(riser)* installations. The operating principle is based on:

- measurement of the mean temperature of the heating unit by the heat cost allocators which are fitted on the front surface of the heating unit;
- direct measurement, if necessary, of the total thermal energy exchanged between the thermal unit and the whole supply installation of the building;
- a simplified model of the heating unit, and
- measurement, if necessary, of the mean temperature of the environment in which each heating unit operates.

Although heat cost allocators are the most widespread type of system, they suffer from various drawbacks, including the fact that they have to be fitted to the front surface of each heating unit in a specific position which represents the mean temperature of the unit. Furthermore, their accessibility is such that they can easily be tampered with, and the accuracy of the cost allocation is degraded with an increase in the variation of the operating conditions of the heating unit with which each individual heat cost allocator is associated. Other drawbacks of this commonly used known art arise from the fact that the accuracy of the heat cost allocation becomes degraded in the presence of furniture or objects placed in front of the heating unit and the heat cost allocator fitted to it. Finally, it is common knowledge that the parameters which describe the model of the heating unit on which the heat cost allocators are installed, and which are necessary for the configuration of the heat cost allocators for metering purposes, are not always known, because only a certain percentage of heating units is identified by appropriate measurements in a climatic test chamber by manufacturers of systems based on heat cost allocators. These parameters may also vary in an unknown way over the years, if the flow of the heat carrier fluid is partially blocked in the heating unit, for example as a result of sediments which are deposited in its valves or at its lower end.

Another method, which is less accurate and therefore less widely used, can be applied to area supply installations and riser installations. In this method, the allocation of the heating consumption of each accommodation unit is based solely on the periods of use. However, this does not allow for many physical factors which in reality make it impossible to have an equal flow rate and temperature of the incoming heat carrier fluid for any given state of use, owing to pressure losses (also called head losses) and thermal losses occurring in the heat carrier fluid in its flow along the supply line.

Furthermore, the types and sizes of the heating units in each accommodation unit may have been modified over time, because of reconstruction for example, and may no longer be uniform from one accommodation unit to the next.

Another metering strategy is based on measurements of indirect physical quantities such as those of the environment in the accommodation unit whose absorption or release of thermal energy is to be metered. A brief description of some of the relevant patent literature is given below.

According to German patent DE 30 12 267, the thermal energy exchanged between the heating installation and each accommodation unit is estimated by using the topographical knowledge of the vicinity relation between accommodation units and the thermal constants (transmittance) and surfaces of the dividing walls in order to calculate the "heat subtraction" by hotter units from cooler units. This technology is essentially based on a knowledge of the internal temperature of each of the heated environments, the thermal constants of the separating elements (walls, floors, door and window frames, and roofs), and the external temperature. The thermal energy released by the heating installation is estimated from the effects on the internal environments of the accommodation units and some structural parameters of the user complex.

This type of system suffers from a number of drawbacks, including the requirement for a high number of sensors to be placed in the accommodation units; where this method is used with a smaller number of environmental temperature sensors, as is often the case, the accuracy of the metering is degraded. This is because the air temperature inside the environments of the accommodation unit can vary greatly both from one room to another and within the same room, for example as a result of the height between the floor and the ceiling at which the temperature sensor is located, or proximity to a window, to a heating unit, or to a perimeter wall which is on the outside of the building, rather than being an internal partition.

EP 0 844 468 uses the idea of deriving the heat consumption from a knowledge of the volumes of air present in each monitored environment and from the temperature difference between successive minimum and maximum temperatures measured in each environment (due for example to periods in which the heating units change from the "off' to the "on" state), in order to keep the temperature in the region of the desired value.

A drawback of this system is that this method not only suffers from the same serious problems as in the previous case, related to the measurement of a temperature which coherently represents the internal mean temperature in the various accommodation units, resulting in degraded metering accuracy, but also has the disadvantage of ignoring the thermal energy lost to the outside environment during the periods in which the heating units are brought to their regular operating state, in other words for the purpose of keeping the internal temperature in the region of the desired level, after the transient period of heating from a preceding lower temperature, and for the purpose of compensating for heat losses to the outside only, thus only allowing for the energy which is required to raise the internal air temperature.

WO 03/60448 describes a method for allocating heating costs to the different rooms of an apartment according to the chosen thermal comfort level. The method operates on the basis of a knowledge of the ambient temperature inside the rooms, the volumes of the rooms and the outside ambient temperatures, making corrections based on degree-days. Specifically, the method estimates the energy transferred from the inside environments of a building to the outside environment, by (partially) modelling the inside environments and measuring the ambient temperatures, on the assumption that this energy is equal to that released by the heating installation.

The described method has the disadvantage that it assumes that the thermal energy exchanged between the environments inside the building and the outside environment is equal to that exchanged internally with the heating installation, and incorrectly assumes that the thermal energy exchanged between the inside and the outside of the accommodation units can be deduced solely from the inside volumes and from the thermal comfort, defined as the temperature reached in an accommodation unit without allowance for thermal transmittance. This means that, if there are apartments which have identical volumes, but one of them has greater losses, for example because of older door and window frames or a different external exposure, then if this apartment reaches the same mean temperature (thermal comfort level) as the others, the same consumption will be recorded. Paradoxically, therefore, this method does not reward user behaviour directed towards energy saving (achieved for example by investing in better wall or frame insulation, or by limiting the time for which windows are open), because it is ignored by the energy metering. For example, an apartment where the windows are always open, and which therefore has maximum consumption, would be metered on the basis of zero or almost zero expenditure, since the inside temperature would be similar to the outside temperature. It is also rather difficult to determine accurately the mean temperature of an apartment or a room, since this can vary, sometimes to a great extent, with the height or with the position with respect to the walls or apertures. Although it is specified that sensors are placed along the heat carrier fluid supply circuit, these sensors are used to start or stop metering, but do not participate in the estimation of the heat consumption.

Furthermore, the method does not allow for heating transients, in other words a possible need to reach the desired temperature after a prolonged period of disuse of the local installation, nor does it allow for the energy consumption required to raise the inside temperature above the losses to the outside.

US 4 509 679 discloses a system for monitoring energy use with a view to permitting allocation of energy costs to users on the basis of their energy usage.

Finally, the UNI 9019 standard which describes the method of metering based on the "degree-day" principle is also based on the measurement of the thermal effect of the heating installation on the environments inside accommodation units, and suffers from similar problems of accuracy.

One object of the present invention is to provide an improved system and method for measuring heat, which can overcome these and other drawbacks of the known art, and which can also be applied in a simple and economical way.

This and other objects are achieved according to the present invention by means of a virtual heat-meter system as defined in the appended Claim 1, and a method for estimating the thermal energy exchanged between a plurality of heat exchanger devices of a central thermal installation and a user complex, as defined in the appended Claim 13.

The metering method according to the system and method proposed by the present invention is not based on measurements of the environmental effects of the heating installation inside the accommodation units, or on methods of the heat cost allocator type. Therefore, by contrast with the prior art, the system and method according to the present invention, described in detail below, again make use of the principle of directly measuring the heat associated with each heat exchanger device, thus avoiding all the negative features of the indirect methods described above, but dispense with the installation and use of heat metering devices for each heating unit, thus drastically reducing the number of metering sensors and devices installed, while achieving highly accurate metering of the heat absorbed by each thermal user. In particular, the system and method according to the present invention make it possible to apply the principle of direct heat metering to each heating unit without installing and using the flow rate sensor and the electronic processing system for each heating unit, which are some of the components forming a direct heat meter.

For these and other reasons, the system and method proposed by the present invention are particularly useful, for example, in the conversion of old central heating installations into functionally autonomous installations for metering energy costs for end users.

Other features and advantages of the present invention will become clear from the following detailed description which is given purely by way of non-limiting example, with reference to the attached drawings, in which:

- Figure 1 is a block diagram of a possible exemplary embodiment of the system according to the present invention;
- Figure 2 is a schematic representation of an example of a heating installation to which the system of Figure 1 is applied; and
- Figure 3 is a block diagram showing by way of example a thermal and fluid dynamic model of the heating installation shown in Figure 2.

In the present description and in the claims, reference will be made to a number of terms whose intended meaning is given in the following definitions.

*User complex:* this is the structure of group of structures with which the heating installation exchanges thermal energy. For example, this complex may be one or more structures of various types, such as residential buildings (such as apartment blocks, terraced houses, bungalows, etc.), commercial buildings, industrial buildings or detached buildings.

*Thermal user:* this is a generic portion of the user complex whose thermal energy consumption is to be monitored, particularly for the purpose of any subsequent metering. It may be an accommodation unit or a group of such units, a specific area or sub-area of an accommodation unit, a room of an accommodation unit, or even the environment heated by a single heat exchanger of the installation.

*Central thermal installation:* this is an installation intended to generate and transfer thermal energy to the thermal users of the user complex by means of a heat carrier fluid via a supply circuit, or intended to draw thermal energy from the users and release it into the outside environment. The installation can be either a heating or a cooling installation.

In the examples of embodiment of the present invention, it will be described as a heating installation of a known type which has a thermal unit (or boiler) for heating the heat carrier fluid and a pumping device for establishing a forced circulation of this fluid in a closed supply circuit.

The thermal installation comprises:

i) *Supply circuit:* this is the set of pipes, branches, joints and valve devices which forms the path of the heat carrier fluid up to its terminations to which the heat exchangers of the installation are connected.

ii) *Thermal unit:* this is an apparatus for generating a variation in thermal energy in the flowing heat carrier fluid obtained from the supply circuit. If one or more thermal users is to be heated, the variation of thermal energy in the heat carrier fluid will be positive. Conversely, if one or more thermal users is to be cooled, the variation of thermal energy in the heat carrier fluid will be negative. For example, in the case of a heating installation, the thermal unit can be a boiler of a known type.

iii) *Pumping device:* this may be any apparatus for establishing forced circulation of the heat carrier fluid through the supply circuit.

iv) *Heat exchanger devices:* these are individual elements used for exchanging heat (by convection or radiation, for example) between the heat carrier fluid flowing in the supply circuit and the thermal users. Examples of such heat exchanger devices can be generic heating units (such as thermosiphons used for heating the environments inside a building) or fan coil units (operating by means of forced ventilation and usable for both heating and cooling).

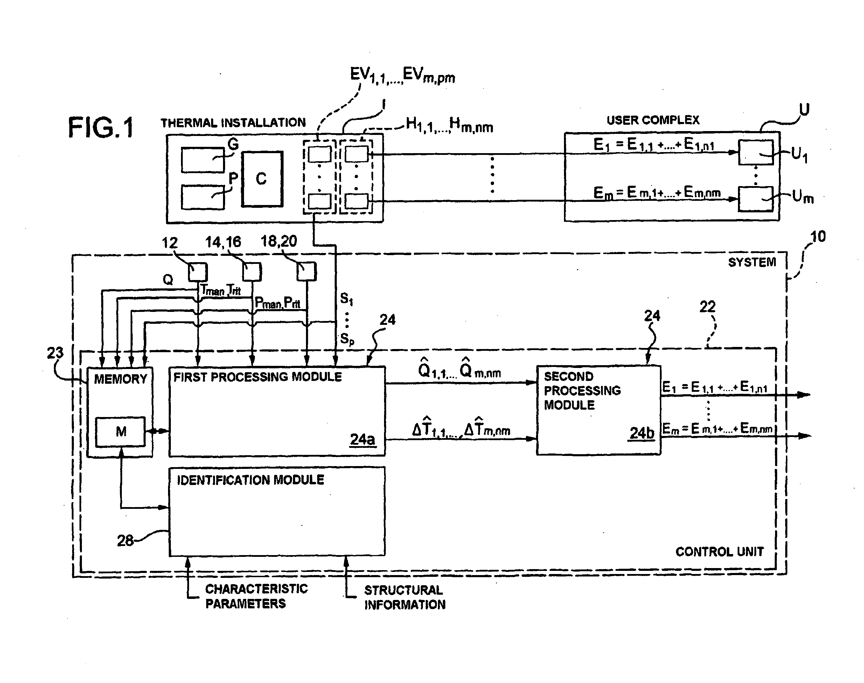

With reference to Figure 1, this shows a schematic block diagram of a possible exemplary embodiment of a system according to the present invention.

The whole system is indicated by the reference numeral 10, and is associated with a user complex U heated by a central thermal installation I. In the embodiment in question, the user complex U is considered to be a residential building, while the central thermal installation I is considered to be a heating installation. However, as mentioned above, and as will be evident to persons skilled in the art from the present description, the principles of the invention are also applicable to different types of user complex, including the case of a cooling installation such as a summer air conditioning installation.

As shown in Figure 1, the user complex U comprises a plurality of thermal users, such as $m$ accommodation units $U_1, ..., U_m$, intended to receive heat from the heating installation I. This heating installation I comprises:

- a supply circuit C, intended to have a heat carrier fluid flowing through it,
- a thermal unit G, such as a boiler, arranged for generating the desired variation in thermal energy in the heat carrier fluid obtained from the supply circuit C, and
- a pumping device P, such as a pump, of a known type, for establishing forced circulation through the supply circuit C.

The heating installation I also comprises a plurality of heat exchanger devices, such as $n = n_1 + ... + n_m$ heating units, where the index m signifies the total number of accommodation units $U_1, ..., U_m$, indicated by the symbols $H_{1,1}, ..., H_{1,n1}, H_{2,1}, ..., H_{2,n2}, ..., H_{m,1}, ..., H_{m,nm}$, where the first subscript indicates the accommodation unit concerned, while the second subscript identifies the specific heating unit within this accommodation unit. The heating units $H_{1,1}, ..., H_{1,n1}, H_{2,1}, ..., H_{2,n2}, ..., H_{m,nm}$ are connected to the supply circuit C in such a way that they are allocated between the m accommodation units $U_1, ..., U_m$, and are adapted to transfer the heat of the heat carrier fluid to the environment in which they are placed. Depending on the type of heating installation I, the allocation of the heating units $H_{1,1}, ..., H_{1,n1}, ..., H_{2,1}, H_{2,n2}, ..., H_{m,1}, ..., H_{m,nm}$ between the individual accommodation units and their type, even within the accommodation units, can be varied. The heating units $H_{1,1}, ..., H_{1,n1}, ..., H_{2,n1}, H_{2,n2}, ..., H_{m,1}, ..., H_{m,nm}$ can also be connected either to a riser supply installation (also called a "vertical" supply system) or to an internal ring supply installation (also called a "horizontal" supply system).

The system 10 includes a plurality of control valve devices, such as $p = p_1 + ... + p_m$ solenoid valves $EV_{1,1}, ..., EV_{1,p1}, EV_{2,1}, ..., EV_{2,p2}, ..., EV_{m,1}, ..., EV_{m,pm}$, for which the first subscript indicates the accommodation unit concerned, while the second subscript identifies the specific valve element associated with this accommodation unit. The solenoid valves $EV_{1,1}, ..., EV_{1,p1}, EV_{2,1}, ..., EV_{2,p2}, EV_{m,1}, ..., EV_{m,pm}$ are interposed and allocated between the branches of the pipes of the supply circuit C and the n heating units $H_{1,1}, ..., H_{1,n1}, H_{2,1}, ..., H_{2,n2}, ..., H_{m,1}, ..., H_{m,nm}$. Thus the path of the heat carrier fluid through the supply circuit C and the *n* heating units $H_{1,1}, ..., H_{1,n1}, H_{2,1}, ..., H_{2,n2}, ..., H_{m,1}, ..., H_{m,nm}$ is controlled according to the state of actuation of each of the individual solenoid valves $EV_{1,1}, ..., EV_{1,p1}, EV_{2,1}, ..., EV_{2,p2}, ..., EV_{m,1}, ..., EV_{m,pm}$.

It is assumed that the individual solenoid valves $EV_{1,1}, ..., EV_{1,p1}, EV_{2,1}, ..., EV_{2,p2}, ..., EV_{m,1}, ..., EV_{m,pm}$ are configured to be placed in two operating states, namely "open" or "closed", according to whether or not it is desired to heat the environments of the associated heating units $H_{1,1}, ..., H_{1,n1}, H_{2,1}, ..., H_{2,n2}, ..., H_{m,1}, ..., H_{m,nm}$. Thus the supply circuit C can assume $2^p$ different operating configurations, for each of which a specific supply path is defined for the heat carrier fluid through the n radiators $H_{1,1}$, ..., $H_{1,n1}$, $H_{2,1}$, ..., $H_{2,n2}$, ..., $H_{m,1}$, ..., $H_{m,nm}$. The actuation of the solenoid valves $EV_{1,1}$, ..., $EV_{1,p1}$, $EV_{2,1}$, ..., $EV_{2,p2}$, ..., $EV_{m,1}$, ..., $EV_{m,pm}$ can be controlled manually by a user or automatically by the electronic controller of each individual solenoid valve if this is provided with an ambient temperature sensor, or by a local control unit associated with each accommodation unit $U_1$, ..., $U_m$, such as a thermostat or thermostat timer of a known type, which is responsible for controlling the temperature in the individual accommodation units $U_1$, ..., $U_m$.

As is known in the art, in the case of a riser supply, the $n_i$ heating units $H_{i,1}$, ..., $H_{i,ni}$ of the i-th accommodation unit $U_i$ are typically associated with $q_i$ corresponding solenoid valves $E_{i,1}$, ..., $EV_{i,qi}$, where $n_i=q_i$. In an internal ring supply, however, all the $n_i$ heating units $H_{i,1}$, ..., $H_{i,ni}$ belonging to the same accommodation unit $U_j$ are generally associated with a single solenoid valve $EV_k$, which intercepts the branch from the vertical column to the internal supply ring to which all the $n_i$ heating units are connected. If a valve device is fitted to each heating unit, the control action and consequently the metering can be further divided independently for each subgroup of heating units in the same accommodation unit. For example, the $n_i$ heating units can be divided into two groups, of x and y elements each, such that $n_i=x+y$, providing separate temperature control and therefore separate metering for the group of heating units $H_{i,1}$,...,$H_{i,x}$ (in the day area, for example) and for the group $H_{i,x+1}$,...,$H_{i,y}$ (in the night area, for example). This can also be achieved easily in the case of a horizontal supply circuit, if two supply rings are present in the accommodation unit concerned, one serving the group of heating units $H_{i,1}$, ..., $H_{i,x}$ and the other serving the group $H_{i,x+1}$, ..., $H_{i,y}$; in this case, only two valve devices are required, one for each ring.

In a normal operating mode which will be described in detail below for a period of time $\Delta T_{TOT}$, the heating installation I supplies thermal energy E to the user complex U by means of the heating units $H_{1,1}$, ..., $H_{1,n1}$, $H_{2,1}$, ..., $H_{2,n2}$, ..., $H_{m,1}$, ..., $H_{m,nm}$, which are supplied by the heat carrier fluid flowing through the supply circuit C. The aforesaid total thermal energy E is allocated between the individual accommodation units $U_1$, ..., $U_m$ in corresponding individual quantities of thermal energy $E_1$, ..., $E_m$. As mentioned above, the purpose of the system 10 according to the present invention is to obtain estimated values $\hat{E}_1$, ..., $\hat{E}_m$ of the thermal energy individually exchanged between the heating thermal installation I and the accommodation units $U_1$, ..., $U_m$.

The system 10 comprises a plurality of main sensors arranged for measuring physical quantities indicative of the operation of the supply circuit C at sampling intervals $\Delta t$ during the aforesaid specified period of time $\Delta t_{TOT}$ and to supply first signals indicative of these data for each of these sampling intervals $\Delta t$.

More specifically, the system 10 comprises at least the following group of main sensors:

- a main flow rate measuring device 12 arranged for supplying first signals $Q_{man.}$ indicative of the flow rate of heat carrier fluid flowing in a main delivery portion $C_{man.}$ of the supply circuit C to which a plurality of heating units are connected;
- a first and a second main temperature sensor 14, 16, configured to supply second main signals $T_{man.}$ and $T_{rit.}$ indicative of a first and a second temperature, respectively, of the heat carrier fluid in the delivery portion $C_{man.}$ and in a return portion $C_{rit.}$, respectively, of the supply circuit C to which a plurality of heating units is connected; and
- a first and a second main pressure sensor 18, 20, arranged for supplying third main signals $P_{man.}$ and $P_{rit.}$ indicative of a first and a second pressure of the heat carrier fluid in the delivery portion $C_{man.}$ and in a return portion $C_{rit.}$ of the supply circuit C to which a plurality of heating units is connected.

As will be evident to those skilled in the art, the first and second main pressure sensors 18, 20 can advantageously be replaced with a single differential pressure sensor which has the function of finding the difference $\Delta p$ between the pressures $P_{man}$ and $P_{rit.}$ (in other words, the total pressure drop across the supply circuit).

Additionally, as described more fully below, the solenoid valves $EV_{1,1}$, ..., $EV_{1,p1}$, $EV_{2,1}$, ..., $EV_{2,p2}$, ..., $EV_{m,1}$, ..., $EV_{m,pm}$ are arranged for supplying directly to the system 10 fourth main signals $s = s_{1,1}$, ..., $s_{1,p1}$, $s_{2,1}$, ..., $s_{2,p2}$, ..., $s_{m,1}$, ..., $s_{m,pm}$ indicative of their respective operating states (in other words, valve open or closed, in the exemplary embodiment in question). In the rest of the present description, the vector s is also called the "operating configuration vector". On the basis of the fourth main signals $s = s_{1,1}$, ..., $s_{1,p1}$, $s_{2,1}$, ..., $s_{2,p2}$, ..., $s_{m,1}$, ..., $s_{m,pm}$, it is possible to determine in an unambiguous way the supply path of the heat carrier fluid through the supply circuit C, thus determining the operating configuration assumed by the latter. In other variant embodiments (not shown), the system can be provided with local detector or controller devices associated with the accommodation units and separated from the solenoid valves, in such a way that their operating and configured states can be set and detected to supply signals indicative of these states of actuation. For example, if the accommodation units are provided with thermostat timer devices which control the solenoid valves, these can store and supply all the necessary information concerning the way in which the states of actuation $s_{1,1}$, ..., $s_{1,p1}$, $s_{2,1}$, ..., $S_{2,p2}$, ..., $s_{n,1}$, ..., $s_{n,pn}$ are varied during the period of time $\Delta t_{TOT}$ in each sampling instant $\Delta t$.

Preferably, the main flow rate measuring device 12 is located in the supply circuit C immediately downstream of the pump P, with respect to the direction imparted to the heat carrier fluid.

Preferably, the first main temperature sensor 14 is located in the supply circuit C immediately upstream of the thermal unit G, and the second main heat sensor 16 is located in the supply circuit C immediately downstream of the group comprising the thermal unit G and the pump P, with respect to the direction imparted to the heat carrier fluid.

Preferably, the first main pressure sensor 18 is located in the supply circuit C immediately upstream of the thermal unit G, and the second main pressure sensor 20 is located in the supply circuit C immediately downstream of the group comprising the thermal unit G, the pump P and the flow rate measuring device 12, with respect to the direction imparted to the heat carrier fluid.

The system 10 also comprises a control unit 22 which includes a memory module 23 for receiving and storing data relating to the main signals $Q_{man.}$, $T_{man.}$, $T_{rit.}$, $P_{man}$, $P_{rit}$ and s supplied by the aforementioned group of main sensors in each sampling interval $\Delta t$. It should be noted that the chosen sampling interval $\Delta t$ is conveniently smaller than the characteristic time constants of the physical behaviour of the heating installation.

Data relating to a thermal and fluid dynamic model M representing the supply circuit C, the heating installation I and the system 10 are initially stored in the memory module 23. The characteristics and procedures of the definition and identification of the thermal and fluid dynamic model M are described below.

The control unit 22 also comprises a processor module 24 configured to acquire from the memory module 23 (or alternatively directly from the same group of main sensors) the stored main signals $Q_{man.}$, $T_{man.}$, $T_{rit.}$, $P_{man.}$, $P_{rit}$ and s, and to process these on the basis of the thermal and fluid dynamic model M which is also stored in the memory 23.

The processor module 24 is therefore arranged for supplying output data $\hat{E}_1$, ..., $\hat{E}_m$ representing the estimate of the actual thermal energy $E_1$, ..., $E_m$ individually exchanged between the thermal installation I and each thermal user $U_1$, ..., $U_m$ during the whole period of time $\Delta t_{TOT}$, using an estimate of the energy exchanged by each heating unit $H_{i,k}$, $\hat{E}_{i,k}$ belonging to the i-th user or accommodation unit.

Optionally, the processor module 24 can comprise a first and a second sub-module 24a and 24b.

The first sub-module 24a is arranged for carrying out the intermediate operation of processing the main signals $Q_{man.}$, $T_{man.}$, $T_{rit.}$, $P_{man.}$, $P_{rit.}$ and s, and is configured to supply the following first and second intermediate data, based on the thermal and fluid dynamic model M:

$$\hat{Q}_{1,1}, ..., \hat{Q}_{1,n1}; \hat{Q}_{2,1}, ..., \hat{Q}_{2,n2} ;...; \hat{Q}_{m,1}, ...., \hat{Q}_{m,nm}$$

and

$$\Delta\hat{T}_{1,1}, ...., \Delta\hat{T}_{1,n1}; \Delta\hat{T}_{2,1}, ..., \Delta\hat{T}_{2,n2};...; \Delta\hat{T}_{m,1}, ....., \Delta\hat{T}_{m,nm}$$

which represent, respectively, the estimate in each sampling interval At of the individual flow rates of heat carrier fluid flowing through each heating unit and the estimate of the thermal difference between the heat carrier fluid at the inlet and outlet of each heating unit, thus forming a virtual heat meter applied to the terminations of each heating unit.

In the context of the present invention, the term "virtual heat meter" denotes a device for measuring and calculating the heat exchanged by a heat exchanger device, through which a heat carrier fluid flows, with its environment, based on the principle of the conventional heat meter, but without using any direct measurement of the flow rate of the heat carrier fluid through the element, and possibly without temperature measurements, which are estimated on the basis of physically and respectively homogeneous measurements (that is to say, measurements of flow rate and temperature) relating to larger portions of the supply circuit which include both the heat exchanger in question and a plurality of other exchanger elements of the installation.

The second sub-module 24b is configured to receive the aforesaid intermediate data

$$\hat{Q}_{1,1}, ..., \hat{Q}_{1,n1} ; \hat{Q}_{2,1},...\hat{Q}_{2,n2} ;...; \hat{Q}_{m,1}, ...., \hat{Q}_{m,nm}$$
and
$$\Delta\hat{T}_{1,1}, ..., \Delta\hat{T}_{1,n1}; \Delta\hat{T}_{2,1}, ..., \Delta\hat{T}_{2,n2} ;...; \Delta\hat{T}_{m,1}, ....., \Delta\hat{T}_{m,nm}$$
and is arranged for supplying the output data
$$\hat{E}_{1,1}, ..., \hat{E}_{1,n1}; \hat{E}_{2,1}, ..., \hat{E}_{2,n2}; ...; \hat{E}_{1,m}, ..., \hat{E}_{1,nm}$$

which relate as a whole to a period of time $\Delta t_{TOT}$ (for example the whole operating season of the whole heating installation) and represent the estimate of thermal energy exchanged between each heat exchanger $H_{i,k}$ and the accommodation unit to which it belongs $U_i$. In order to obtain the aforesaid output energy data $\hat{E}_{1,1}$, ..., $\hat{E}_{1,n1}$; $\hat{E}_{2,1}$, ..., $\hat{E}_{2,n2}$; ...; $\hat{E}_{1,m}$, ..., $\hat{E}_{1,nm}$, the second sub-module 24b calculates a sum or an integration with respect to time of the thermal power transferred by the generic heat exchanger $H_{i,k}$ to the accommodation unit $U_i$ to which it belongs, that is to say the quantity $\hat{W}_i$. The total thermal power exchanged between the heating units of the generic i-th accommodation unit and the internal environment of this i-th accommodation unit is therefore equal to the sum $\hat{W}_i = \hat{W}_{i,1} +... + \hat{W}_{i,ni}$, which can be found from the intermediate data

$$\hat{Q}i = (\hat{Q}_{i,1},...,\hat{Q}_{i,ni}) \text{ and } \Delta \hat{T}i = (\Delta \hat{T}_{i,1},...,\Delta \hat{T}_{i,ni})$$

supplied by the first sub-module 24a based on the formulae:

$$\hat{W}_{i,j} = \hat{Q}_{i,j}(t_k) * c_p * \Delta \bar{T}_{i,j}(t_k)$$

,

$$\hat{E}_i = \sum_{j=1}^{j=n_i} \sum_{k=0}^{k=k_{fin}} \hat{W}_{i,j}(t_k) * \Delta t = \sum_{j=1}^{j=n_i} \sum_{k=0}^{k=k_{fin}} \hat{Q}_{i,j}(t_k) * c_p * \Delta \bar{T}_{i,j}(t_k) * \Delta t$$

The aforesaid formula is a discretization of the continuous-time equation which expresses the energy exchanged by means of a flowing heat carrier fluid

$$\hat{E}_i = \sum_{j=1}^{j=n_i} \hat{E}_{i,j} = \sum_{j=1}^{j=n_i} \int_{t_{in}}^{t_{fin}} \hat{W}_{i,j}(t)dt = \sum_{j=1}^{j=n_i} \int_{t_{in}}^{t_{fin}} \hat{Q}_{i,j}(t) * c_p * \Delta \bar{T}_{i,j}(t)dt$$,

in which:

- $c_p$ is the thermal capacity of the fluid,
- $\Delta \bar{T}_{i,j}(t_k)$ is the temperature difference of the heat carrier fluid between the inlet and outlet of the j-th heating unit of the i-th accommodation unit,
- $\hat{Q}_{i,j}(t)$ is the mass flow rate of the fluid through the j-th heating unit of the i-th accommodation unit,
- $t_k = t_{in} + k \cdot \Delta t$ is the k-th sampling instant,
- $t_{in}$ is the initial sampling instant for k=0, and
- $t_{fin} = t_{in} + k_{fin} \cdot \Delta t$ is the final one

and such that

$$\Delta t_{TOT} = t_{fin} - t_{in} = k_{fin} \cdot \Delta t .$$

The output energy data $\hat{E}_1, ..., \hat{E}_m$, relating respectively to the users $U_1, ..., U_m$ and equal to the sum of the estimates of energy transfer of each heating unit belonging to the same i-th user ($\hat{E}_i = \hat{E}_{i,1} + ... + \hat{E}_{i,n1}$), can be stored in a suitable way in the memory 23 or can be transmitted to additional remote devices for subsequent processing.

It is to be understood that the transmission of the main signals $Q_{man.}$, $T_{man.}$, $T_{rit.}$, $P_{man.}$, $P_{rit.}$ and s to the control unit 22 can take place in any way known to those skilled in the art, for example by means of wireless or radio links of known types. Clearly, the above remarks are also valid for the intermediate data

$\hat{Q}_{1,1} ,..., \hat{Q}_{1,n1} ; \hat{Q}_{2,1} ,... \hat{Q}_{2,n2} ;...; \hat{Q}_{m,1},..., \hat{Q}_{m,nm}$
$\Delta \hat{T}_{1,1},..., \Delta \hat{T}_{1,n1}; \Delta \hat{T}_{2,1},..., \Delta \hat{T}_{2,n2} ;...; \Delta \hat{T}_{m,1},...., \Delta \hat{T}_{m,nm}$
and the output data
$\hat{E}_{1,1}, ..., \hat{E}_{1,n1}; \hat{E}_{2,1}, ..., \hat{E}_{2,n2}; ...; \hat{E}_{1,m}, ..., \hat{E}_{1,nm}.$

Consequently, the modules and sub-modules making up the control unit 22 can also be distributed in different locations inside or outside the user complex.

As will also be described more fully below, one of the advantages gained by the use of this approach for obtaining the output data $\hat{E}_{1,1},...,\hat{E}_{1,n1};\hat{E}_{2,1},...,\hat{E}_{2,n2};... ;\hat{E}_{1,m},...,\hat{E}_{1,nm}$ lies in the drastic reduction of the physical quantities which have to be measured during the operating mode of the installation and which are required for a reliable estimate of the thermal consumption of the individual accommodation units $U_1, ..., U_m$. There is a consequent reduction in the number of sensors and devices which have to be installed in the user complex U and in the central thermal installation I. This because, simply by using the main signals $Q_{man.}$, $T_{man.}$, $T_{rit.}$, $P_{man.}$, $P_{rit.}$, s representing the overall operating conditions of the supply circuit C and applied to the thermal and fluid dynamic model, it is possible to predict, with even greater accuracy than that of the alternative existing systems described above, the amount of the heat exchange between the thermal installation I, by means of the individual heat exchanger elements $H_{i,k}$, and the accommodation units $U_1$, ..., $U_m$, both in stationary conditions and in hydraulic and/or thermal transient conditions, and also in any anomalies. This simplifies and improves the installation procedures, reduces the overall costs of the system, reduces maintenance work and limits the visual impact of the devices installed in the accommodation units $U_1$, ..., $U_m$.

Preferably, the system 10 comprises a group of secondary sensors including secondary heat sensors (not shown) arranged for supplying secondary or identification signals, which indicate the temperature of the heat carrier fluid flowing in further portions of the supply circuit C, and particularly in its secondary branches or at terminations in the proximity of the heating units.

For example, if there are numerous risers in the supply circuit C, it is possible to install these secondary heat sensors in the portion of riser immediately downstream of the delivery branch of the riser from the main circuit and immediately upstream of the junction of the vertical return pipe towards the main supply circuit. These sensors can if necessary be fitted to all the risers or, conveniently, to a limited representative sample.

In another example, it is possible to include one or more secondary flow rate sensors (not shown) in one or more bypass portions which may already be present along the main supply line. Such a secondary flow rate sensor is arranged for supplying secondary signals indicative of the flow rate measurement in the corresponding bypass portion according to the operating configuration assumed by the fluid circuit C (that is to say, on the basis of the operating states of the control valve devices). The aforesaid secondary flow rate sensor is therefore useful for finding the fluid pressure drops along the closed supply portion on the corresponding bypass.

According to a further example, it is also possible to include one or more additional secondary temperature sensors (not shown) in one or more bypass portions which may be present. Such a secondary temperature sensor is arranged for supplying secondary signals indicative of the temperature in the terminal portion of the bypass portion, and representative of the thermal losses along the whole portion of supply circuit which leads to the corresponding bypass.

According to another example, it is possible to obtain further information on the operation of the hydraulic circuit C including additional secondary heat sensors arranged for supplying signals indicative of the temperature of the heat carrier fluid at the inlet and/or at the outlet of one or more of the heating units $H_{1,1}$, ..., $H_{1,n1}$, $H_{2,1}$, ..., $H_{2,n2}$, ..., $H_{m,1}$, ..., $H_{m,nm}$.

Finally, according to another example, it is possible to include one or more pressure sensors, either single or differential, in portions of the circuit in which the pressure can conveniently be measured in order to determine the fluid pressure drop between two points of the same supply circuit; or to provide self-sealing connections for the fitting of mobile pressure sensors.

This group of secondary sensors is preferably not used by the system 10 to make direct real-time measurements in the operating mode in order to meter the thermal energy exchanged, even though all the prior art systems described above are used in this way. Rather, these sensors are used in the mode of identification of the thermal and fluid dynamic model M which is described below, for the sole purpose of identifying (that is to say, determining) the corresponding values of the characteristic parameters of the thermal and fluid dynamic model M defined for each specific installation I on which the system operates. The group of secondary sensors can therefore be conveniently installed in such a way that they are removable from the heating installation I and from the supply circuit C in particular. As will be clear to those skilled in the art, the process of identifying the thermal and fluid dynamic model M becomes more precise as the number of secondary sensors fitted increases (that is to say, as the number of portions of the supply circuit C in which the significant physical quantities are measured increases). Thus the thermal and fluid dynamic model M can supply at its output a more accurate estimate of the thermal energy exchanged between the heating installation I, via the heat exchangers $H_{i,n}$, and the accommodation units $U_1$, ..., $U_m$.

For more accurate operation, some of the secondary sensors, particularly the secondary heat sensors arranged for supplying signals indicative of the temperature of the heat carrier fluid at the inlet and/or at the outlet of one or more of the heating units, can be included among the main sensors of the system, that is to say those used during the operation of the installation I for the purposes of metering the thermal energy exchanged.

Furthermore, the system 10 can if necessary comprise a group of auxiliary sensors (not shown) arranged for supplying auxiliary signals indicative of physical quantities relating to elements and components external to the supply circuit C, but once again for the purpose of identifying the thermal and fluid dynamic model or for enhancing the accuracy of the estimate of the energy exchanged between each heating unit and its user in the absence of the secondary sensors of the temperature of the heat carrier fluid at the inlet and outlet of the same heating unit, and not for the purpose of collecting measurements for estimating the thermal energy released by the internal environments and the external environment of the building, as would be the case with the known methods mentioned above.

Therefore, as a further example, the second sensor group can include auxiliary thermal sensors (not shown) configured to supply signals indicative of the ambient temperature in a corresponding internal area of the accommodation

units $U_1$, ..., $U_m$. Since the temperature can vary substantially between the rooms inside the accommodation units $U_1$, ..., $U_m$, it is also possible to install a plurality of these auxiliary internal ambient temperature sensors, one per area or one per room, not so much as a direct support for the metering method described herein, but as an accompaniment to the temperature control system which may include a division of the internal environment of a single accommodation unit into a number of independently controlled areas, making it possible to set the desired temperature for each area independently. In such a case, as mentioned above, the heating units $H_{i,1}$, ..., $H_{i,ni}$ are divided into groups, each relating to a specific control area, each area being associated with one or more sensors which detect an internal ambient temperature representing the mean temperature of the area to which it relates. In this case also, the information on the open or closed state of the solenoid valves of an i-th accommodation unit can be represented by the operating configuration vector $s_i(t)$.

However, since further ambient internal and/or external temperature measurements are available for control purposes, the thermal and fluid dynamic model M can also allow for the contribution made by the following additional auxiliary signals in order to increase the precision of the method of estimating the exchanged thermal energy.

- auxiliary signals supplied by the auxiliary heat sensors, and
- external auxiliary signals supplied by the external auxiliary heat sensors.

Additionally, the control unit 22 advantageously comprises an identification module 28 arranged for carrying out a preliminary identification of the characteristic parameters of the thermal and fluid dynamic model M and then for supplying their values to the memory module 23.

The identification procedure comprises a first fully automatic or semi-automatic step which takes place at the time of installation.

The purpose of this first step is to obtain the values of the characteristic parameters of the thermal and fluid dynamic model M which describes the physical behaviour of each individual central thermal installation I and of the sensors and actuators of the system. This identification procedure is carried out on each thermal installation I to which the system proposed by the invention is fitted. Preferably, a laboratory is used for identifying the behaviour models of standard components such as sensors, pumps and actuators and for verifying the characteristics declared by the manufacturers, and it is unnecessary to repeat the whole identification procedure for each installation if the same components are installed. On the other hand, where the central thermal installation I is concerned, the innovation of this estimate of the exchanged thermal energies is such that a thermal and fluid dynamic model M of the installation I, valid for each individual installation, is defined, and this is effectively identified by making a plurality of measurements in different predetermined operating configurations which are processed online or offline to obtain the values of the aforesaid characteristic parameters. Thus, all the physical elements relating to the specific central thermal installation I are effectively modelled and identified and are not simply assumed on the basis of predetermined tables, as is the case with heat cost allocators and the heating units to which the allocators are fitted.

To facilitate the determination of the values of these characteristic parameters, it is preferable to use a set of physical assumptions, which enable the whole identification procedure to be simplified while ensuring that the model identified in this way meets the desired accuracy requirements.

The physical assumptions are as follows:

- constancy of the coefficients regardless of temperature variation: it is assumed that the pressure drops do not vary as a function of the temperature fluctuations of the heat carrier fluid in the actual operating ranges, and
- complete characterization regardless of the variation of the flow conditions (turbulent or laminar): it is assumed that the variation of pressure drop in the different flow conditions is completely and sufficiently characterized by the use of the corresponding conventional formulae for the calculation of the pressure drops in the laminar and turbulent conditions.

The identification procedure is intended to provide the operating conditions required for each identification step where necessary. For example, it might be necessary to create steady-state operating conditions stabilized in respect of the thermal and fluid characteristics. Therefore, during a change from a preceding operating condition to the next one, it is general practice to wait until a transient settling period has been completed and the new regular operating conditions have been established. These steady-state conditions can be useful, for example, in determining the heat or pressure losses along specific portions of the supply circuit. In other identification steps, the procedure is intended to provide controlled transient conditions in order to create suitable stimuli at the inlet of the element being identified. This may take place, for example, in the identification of the thermal behaviour of the heating units.

Although a specific choice has been made in the following example in respect of the modelling, the system and method according to the present invention relate to an estimate of the thermal energy exchanged between a user complex and a central thermal installation which can be obtained with any type of mathematical model, provided that it coherently represents the real physical behaviour of each component unit of the thermal installation. The aim is to obtain a virtual heat meter associated with each heat exchanger device, in other words to obtain a coherent and accurate estimated measurement of the energy released by each heating unit without using physical sensors (inlet temperature sensor, outlet temperature sensor, heat carrier fluid flow rate sensor and electronic processing system) to construct the heat meter. The possible general types of model include the "black box", "grey box" and "white box" type; the choice of the type of model and of the specific model will affect the identification procedure.

The term "white box model" signifies a model based on the direct identification and use of the equations describing the physical phenomena which govern the operation of the object described.

The term "black box model" signifies a model which requires no knowledge of the physical laws of the real system to be represented. The model is characterized by "stimulating" the real system with suitable inputs and measuring the outputs of the real system which the "stimuli" have generated. Statistical criteria are then used to characterize this type of model.

The term "grey box model" signifies a hybrid of the two preceding types, based on parametric equations derived from a partial knowledge of the physical phenomena which govern the behaviour of the real physical system. This type of model is also subjected to appropriate "stimuli" and the resulting outputs are used to determine the parameters of the equations.

For the first step of the identification procedure, the characteristic parameters to be estimated are determined mainly by the structure and the static and dynamic behaviour, and partially by the specific model chosen for each component unit of the thermal installation, as follows:

- the heating installation,
- the supply circuit,
- the heating units,
- the solenoid valves, and
- the sensors fitted in the system.

Advantageously, the identification module 28 carries out procedures of actuation and measurement to identify the characteristic parameters indicative of the behaviour of the pump P, of the main flow rate measuring device 12, of the solenoid valves $EV_{1,1}$, ..., $EV_{1,p1}$, $EV_{2,1}$, ..., $EV_{2,p2}$, ..., $EV_{m,1}$, ..., $EV_{m,pm}$, of the temperature sensors 14 and 16, of the supply circuit C, and of the heating units $H_{1,1}$, ..., $H_{1,n1}$, ..., $H_{2,1}$, $H_{2,n2}$, ..., $H_{m,1}$, ..., $H_{m,nm}$. As mentioned above, these procedures can be conveniently carried out either in the laboratory or directly on the central thermal installation I, according to circumstances, and are executed by:

- setting the actuation states such as the states of the valve devices and the pump operating conditions;
- appropriately stimulating the inlets of the elements being identified, if necessary;
- acquiring the measurements responding to the stimuli at the outlets of the individual elements or of the whole thermal installation, and
- processing the measurement data to extract the values of the characteristic parameters relating to the specific model.

All the parameters described below as significant for the various elements of the system and of the thermal installation relate to an example for which specific, but not exclusive, mathematical models have been chosen to represent the thermal and fluid behaviour of each element.

In relation to the pump P, the characteristic parameters which are advantageously supplied at the input of the identification module 28 comprise those listed in the table below.

| SYMBOL | NAME |
|---|---|
| $R_p$ | Range of fluctuation of the pump pressure |
| $\varepsilon_{p,\infty}$ | Static error of the pump pressure |
| $\tau_p$ | Delay for settlement of the pump pressure |
| $\dot{m}_{P,\max}$ | Maximum flow rate of the pump |
| $\dot{m}_{P,\min}$ | Minimum flow rate of the pump |
| $\tau_{P,rec,td}$ | Top-down recovery time: the time taken for the pump to change from the maximum pumping head (pressure difference between its terminations) to the minimum or zero value |
| $\tau_{P,rec,dt}$ | Down-top recovery time: the time taken for the pump to change from the minimum or zero value of pumping head to the maximum value |

With reference to the main flow rate measuring device 12, the characteristic parameters which are advantageously identified and then evaluated by the identification module 28 comprise those listed in the following table:

| SYMBOL | NAME |
|---|---|
| $\tau_{FM}$ | Measurement delay |
| $\varepsilon_{FM,max}$ | Accuracy at maximum flow rate |
| $\dot{m}_{P,min}$ | Minimum flow rate of the flow rate measuring device |
| $\dot{m}_{P,max}$ | Maximum flow rate of the flow rate measuring device |

With reference to the solenoid valves $EV_{1,1}$, ,..., $EV_{1,p1}$, $EV_{2,1}$, ..., $EV_{2,p2}$, ..., $EV_{m,1}$, ..., $EV_{m,pm}$, the characteristic parameters which are identified and then evaluated by the identification module 28 comprise those listed in the table below, assuming that the model of the behaviour of the solenoid valves (for example, a mechanical valve with a slow actuator, having actuation times of approximately 120 seconds) is represented as follows:

- for the fluid behaviour of the mechanical valve in a state of full opening, by a concentrated pressure loss and therefore by the conventional equation ("white box" model):

$$\Delta P_{EV} = k_{EV} \cdot \dot{m}^2$$

where $\Delta P_{EV}$ is the pressure loss (fluid pressure drop) across the solenoid valve, $k_{EV}$ is the pressure loss coefficient, and $\dot{m}$ is the flow rate, and

- for the actuator, it is assumed that an "on/off" model which simplifies the opening and closing transients with medium actuation delays does not degrade the accuracy of the overall metering if appropriately identified

| SYMBOL | NAME |
|---|---|
| $\tau_{EV,oad}$ | Opening actuation delay |
| $\tau_{EV,cad}$ | Closing actuation delay |
| $\tau_{EV,ofbsd}$ | Opening feedback signal delay |
| $\tau_{EV,cfbsd}$ | Closing feedback signal delay |
| $\tau_{EV,od}$ | Opening delay |
| $\tau_{EV,cd}$ | Closing delay |
| $k_{EV}$ | Coefficient of pressure loss for the solenoid valve (considered as the total unit comprising the actuator and mechanical valve) |

It should also be noted with respect to the solenoid valves $EV_{1,1}$, ..., $EV_{1,p1}$, $EV_{2,1}$, ..., $EV_{2,p2}$, ..., $EV_{m,1}$, ..., $EV_{m,pm}$ that, if these are of the slow operating type (e.g. electrothermally actuated valves with switching transients of about 120 seconds in both directions), the transient pressure losses $\Delta P_{EV}$ are variable and therefore cannot be represented by a single parameter unless an aggregate statistical quantity such as the mean value is found to be significant in a second analysis. In any case, the transient pressure loss $\Delta P_{EV}$ is given by the set of measurements of pressure difference across the individual solenoid valves $EV_{1,1}$, ..., $EV_{1,p1}$, $EV_{2,1}$, ..., $EV_{2,p2}$, ..., $EV_{m,1}$, ..., $EV_{m,pm}$ during the whole opening and closing period. In all cases, the pressure losses change as a function of the type and size of the valve to which the actuator is fitted, and of the type of actuator used (straight valve, L-valve, etc.), and the identification must therefore be repeated in each case.

With reference to the main temperature sensors 18, 20, and to the secondary sensors, the characteristic parameters which are identified, and then evaluated, by the identification module 28 comprise those listed in the table below.

| SYMBOL | NAME |
|---|---|
| $\Delta T_{T\Sigma,\eta\beta,\iota,\kappa}$ | Offset between the sensor pair formed by the inlet and outlet temperature sensors of the k-th thermal device belonging to the i-th accommodation unit $U_i$. |

(continued)

| SYMBOL | NAME |
|---|---|
| $\Delta T_{T\Sigma,\delta\pi,\varphi}$ | Offset between the j-th pair formed by a delivery sensor and a return sensor positioned in any portion of the supply circuit which is not a thermal device. |
| $\Delta T_{T\Sigma,\rho\varepsilon\phi,\eta\beta,\iota,\kappa}$ | Offset between the pair formed by the reference temperature sensor of the installation (defined as a sensor on the main line nominally chosen as the reference sensor for the whole installation) and the temperature sensor at the k-th thermal device of the i-th accommodation unit $U_i$. |
| $\Delta T_{T\Sigma,\rho\varepsilon\phi,\delta\pi\lambda,\iota}$ | Offset between the i-th pair formed by the reference temperature sensor of the installation and the i-th delivery or return temperature sensor positioned in any portion of the supply circuit which is not a thermal device. |
| $T_{cal,TS,hb,i,k}$, $T_{cal,TS,dpl,i}$, $T_{cal,TS,ref,hb,i,k}$, $T_{cal,TS,ref,dpl,i}$ | The respective temperatures at which the above measurements of offset are made. |

With reference to the various portions and elements making up the supply circuit, the characteristic parameters which are identified, and then evaluated, by the identification module 28 comprise those listed in the table below, provided that a descriptive fluid dynamic model of the "white box" type, for example, is chosen, as represented by the general equation

$$\Delta P = k \cdot \dot{m}^2$$

where k is the corresponding pressure loss (pressure drop) coefficient across the element, $\dot{m}$ is the mass flow rate of the heat carrier fluid through the element which in this example is assumed to operate in completely turbulent conditions. Other specifications may be made as required by a variation in the type of elements of the fluid supply circuit (straight and curve portions, connectors/disconnectors, manifolds, etc.) and/or by a variation in the fluid condition which can be represented by the Reynolds number.

| SYMBOL | NAME |
|---|---|
| $k_{PL,bypass,k}$ | Pressure loss coefficient for the k-th bypass portion |
| $k_{Pl,bypass,k}$ | Pressure drop coefficient for the i-th portion of the main circuit |
| $\gamma_{imp.distr.princ.}$ | Thermal transmission coefficient per unit of length of the main supply portion |
| $\gamma_{vpl,k}$ | Thermal transmission coefficient per unit of length of the k-th riser |
| $k_{vpl,1,k},...,k_{vpl,N,k}$ | Pressure loss coefficient associated with the various portions of the k-th riser with a change in the storey from 1 to N-th |
| $k_{a,N,k}$ | Pressure loss coefficients associated with the branches of the various thermal users (their thermal devices) from the risers |

With reference to the heating units for which a "black box" mathematical model, or more specifically a second-order ARX filter, has been chosen in the example, the characteristic parameters which are identified, and then evaluated, by the identification module 28 are derived from least squares numerical estimation algorithms. This type of filter effectively approximates the variation of the heat carrier fluid temperature measured at the outlet of the heating unit. The second order ARX equation of the "black box" thermal model of the heating unit is as follows:

$$T_{hbout,i,k}(j) = a_1 T_{hbout,i,k}(j-1) + a_2 T_{hbout,i,k}(j-2) + b_{11}\dot{m}_{hbout,i,k}(j-1) + $$
$$+ b_{12}\dot{m}_{hbout,i,k}(j-2) + b_{21}T_{hbout,i,k}(j-1) + b_{22}T_{hbout,i,k}(j-2)$$

and its identification preferably based on the sampling of the inlet and outlet temperature and of the corresponding flow rate in different transient and steady-state operating conditions of the heating unit.
As mentioned above, the step of identifying the various modelling units making up the whole thermal and fluid dynamic model M used by the system and method according to the present invention is usually preceded by an analysis of the central thermal installation by a human operator, that is adapted to define the following:

- the structure of the existing thermal installation;
- the topological arrangement of the various elements of the generation and supply installation with respect to the rooms of the building;
- the arrangement of the devices and sensors of the system with respect to the structure of the installation and of the building; and
- the functional definition of the control system, such as the division into independently controlled areas within a single accommodation unit.

This information is provided to the identification module 28 to implement the identification procedure. This procedure can be fully automated if the identification module 28 is capable of setting all the necessary operating states and/or stimuli and of measuring all the necessary physical quantities for the procedure.

Alternatively, the identification procedure can be semi-automatic if it is implemented by the identification module 28 with the support of a human operator who manually sets particular operating states and/or uses mobile measuring instruments to determine specific physical quantities at points in the supply system. This may be required in order to resolve critical points in the identification of specific thermal installations without the need to install fixed sensors which will only be used once.

Essentially, in this step of the identification process, the identification module 28 is arranged for:

- setting a predetermined sequence of operating configurations s(t) and stimulation of the installation in the supply circuit C (particularly as regards the specific heads created by the pump and temperatures of the heat carrier fluid leaving the thermal unit), and
- identifying the initially defined thermal and fluid dynamic model M by determining the variation of the main signals $Q_{man.}$, $T_{man.}$, $T_{rit.}$, $P_{man.}$, $P_{rit.}$, s(t) and of the aforesaid secondary signals as a function of the sequence of operating configurations s(t) set in the supply circuit C.

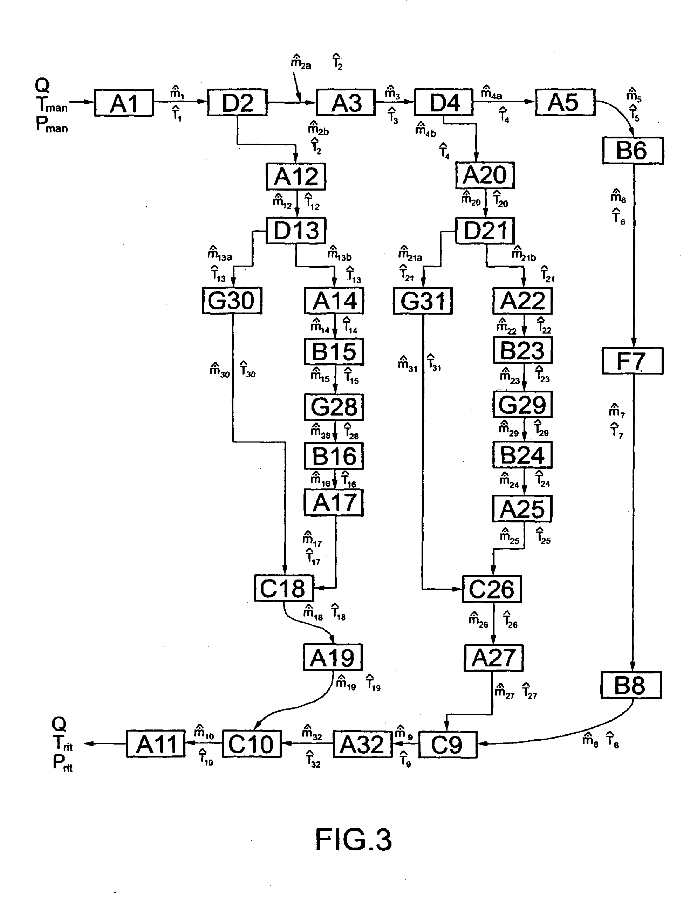

In all cases, in operating conditions, in other words when the system 10 is required to estimate the heat given off (in winter) or absorbed (in summer) to or from the thermal users, the measurement set used is extremely small, since it is only necessary to determine the quantities $\Delta P$ (pressure difference along the whole of the main line), $\Delta T$ (temperature difference along the whole of the main line) and $\dot{m}$ (flow rate along the main line) of the heat carrier fluid globally associated with the supply circuit C and the operating configuration vector s(t) which in this case is not set externally by the identification module, but is set locally and independently within each accommodation unit for the purpose of controlling the temperature and keeping it in the proximity of the value freely chosen by each user; all the intermediate quantities, including those which are significant for the heat exchange between heating units and the internal environments of the accommodation units, are quantities estimated by the thermal and fluid dynamic model M of the installation used by the system and the method. In other words, the estimated value of the temperature, the estimated value of the heat carrier fluid flow rate and the estimated value of the pressure losses at the outlet and across a modelled structural unit (see the example in Figure 3) are determined on the basis of the model and its characteristic parameters and as a function of the estimates of the same types of physical quantities made for the preceding unit. Exceptions to this rule are the physical quantities of pressure, temperature and heat carrier fluid flow rate which are actually measured in the delivery and return parts of the whole main supply circuit; in the example in Figure 3, the first unit A1 models the first delivery portion of the main supply line immediately downstream of the pump where the physical quantities of instantaneous pressure, temperature and flow rate are measured within the fluid circuit. Similarly, the pressure and temperature of the heat carrier fluid are determined in the final return portion of the main supply line, which corresponds to the modelling unit All in the example in Figure 3. Because of this innovative approach, in which the values of the quantities at the input of each of the modelling units of the individual elements of the circuits are values estimated with very high accuracy by the preceding unit, the number of sensors and devices is drastically reduced, while maintaining the desired specifications in respect of the quality of the estimation of the thermal energy exchanged.

Thus, during the operating phase of the previously identified system, in order to make an independent estimate of the thermal energy exchanged between the thermal users and the central thermal installation I, the first processing module 24a can correlate each structural unit of the model with the preceding and successive units, so as to obtain a unique thermal and fluid dynamic model M which, by additionally using a knowledge of the temporal variation of the operating configuration vector s = $s_{1,1}$, ..., $s_{1,p1}$, $s_{2,1}$, ..., $s_{2,p2}$, ..., $s_{m,1}$, ..., $s_{m,pm}$, expresses the following relations:

- that of the flow rate of the heat carrier fluid $Q_{man.}$ flowing in the main delivery portion $C_{man.}$ immediately downstream of the pumping device of the supply circuit C;
- that of the estimated pressure losses $\Delta\hat{P}_{i,j}$ of each portion of the supply circuit;

- that of the pressure difference $P_{man.} - P_{rit.}$ of the heat carrier fluid between the main delivery portion $C_{man.}$ and the main return portion $C_{rit.}$ respectively of the supply circuit C with the estimate of the flow rate of the heat carrier fluid $\hat{Q}_{1,1},..., \hat{Q}_{1,n1}, \hat{Q}_{2,1},..., \hat{Q}_{2,n2},..., \hat{Q}_{m,1},..., \hat{Q}_{m,nm}$ flowing through each heating unit (in the case of a riser supply system) or each group of heating units (in the case of a horizontal or area supply system) $H_{1,1}, ..., H_{1,n1}, H_{2,1}, ..., H_{2,n2}, ..., H_{m,1}, ..., H_{m,nm}$ of the thermal users $U_1, ..., U_m$;

- that of the first and second temperatures $T_{man.}, T_{rit.}$ of the heat carrier fluid present, respectively, in the main delivery portion $C_{man.}$ immediately downstream of the pumping device and in the main return portion $C_{rit.}$ immediately upstream of the heat generator of the supply circuit C;

- that of the estimated heat carrier fluid flow rates $\hat{Q}_{1,1},..., \hat{Q}_{1,n1}, \hat{Q}_{2,1},..., \hat{Q}_{2,n2},..., \hat{Q}_{m,1},..., \hat{Q}_{m,nm}$ through each heating unit, and

- that of the estimated thermal losses $\Delta\hat{T}_{i,j}$ associated with each portion of the supply circuit with the estimate of the thermal differentials $\Delta\hat{T}_{1,1},..., \Delta\hat{T}_{1,n1}, \Delta\hat{T}_{2,1},..., \Delta\hat{T}_{2,n2},..., \Delta\hat{T}_{m,1},..., \Delta\hat{T}_{m,nm}$ relating to each heating unit $H_{1,1}, ..., H_{1,n1}, H_{2,1}, ..., H_{2,n2},..., H_{m,1}, ..., H_{m,nm}$ of the thermal users $U_1, U_m$.

Clearly, the aforesaid relations depend on the states of actuation $s_{1,1}, ..., s_{1,p1}, s_{2,1}, ... ,s_{2,p2}, ..., s_{m,1}, ..., s_{m,pm}$ of the solenoid valves $EV_{1,1}, ..., EV_{1,p1}, EV_{2,1}, ..., EV_{2,p2}, ..., EV_{m,1}, ..., EV_{m,pm}$, which define a different operating configuration of the supply circuit C in each case.

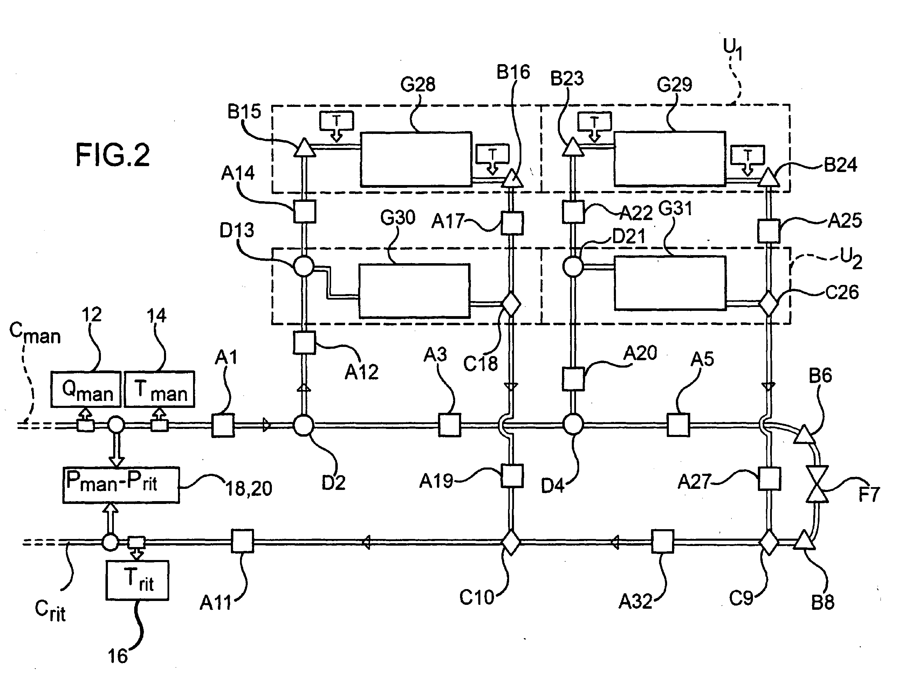

With reference to Figures 2 and 3 in particular, an illustration is given of a simplified example of a thermal installation for which the thermal and fluid dynamic model M is defined and identified. The structure examined is a thermal installation I with two risers and two accommodation units $U_1$ and $U_2$, each of these having two corresponding heating units.

In this example, the thermal installation is composed of various structural units which are indicated by alphanumeric references, each comprising a letter followed by a number.

Each letter represents the type of each structural unit identified, as follows:

- the letter A indicates the straight portions of pipe of the supply circuit, which are characterized by distributed pressure losses;
- the letter B indicates the portions of pipe characterized by concentrated pressure losses, as in the case of curved portions, throttles, balancing valves, sensors fitted to the line, etc.;
- the letter C indicates a T-joint which combines two separate incoming flows into a single outgoing flow;
- the letter D indicates a T-branch which divides the incoming flow into two separate outgoing flows;
- the letter F indicates a bypass valve;
- the letter G indicates a heating unit, and
- the letter U indicates a thermal user.

Each number following the corresponding letter provides a unique identification of each element in the heating installation. In the example of Figure 2, the heating units $G_{28}$ and $G_{29}$ are associated with the thermal user $U_1$, which may be an accommodation unit for example, while the heating units $G_{30}$ and $G_{31}$ are associated with the user $U_2$.

Additionally, in Figure 3 the references $Q$, $T_{man}$, $T_{rit}$, $P_{man}$ and $P_{rit}$ represent the measurements made by means of the sensors of the system according to the present invention. On the other hand, when the aforesaid references m and T are accompanied by a subscript and the symbol "^", they refer to the estimated value at the output of the structural unit of the model which is identified by the subscript. For example, $\hat{m}_{20}$ identifies the estimated value of the flow rate of the heat carrier fluid leaving the structural unit A20, according to the thermal and fluid dynamic model M.

As indicated above, the operator must describe the structure of the heat generation and supply installation I and then the structure of the corresponding thermal and fluid dynamic model before the identification process begins. This definition is produced by specifying the structural units of the model which represents each element of the supply line, and by placing them in an input/output relationship with each other. They are also placed in their topological context with respect to the structure of the building. It should be noted that, for the sake of brevity, the estimated pressure losses $\Delta P_{i,j}$ are omitted from Figure 3, but are estimated between the fluid inlet and outlet of each structural unit.

As a result of the introduction of the characteristic parameters specified above, which are identified and then evaluated by the identification module 28, the processing module 24 makes use of the thermal and fluid dynamic model M (in this example) which expresses the relation between:

- the flow rate of the heat carrier fluid at the inlet $Q_{man.}$, the temperature at the inlet $T_{man.}$ and at the outlet $T_{rit.}$, and the pressure loss $P_{man}-P_{rit}$ actually determined at the ends of the supply circuit C, and

- the estimated outlet values of the heat carrier fluid flow rate $\hat{m}_{28}, \hat{m}_{29}, \hat{m}_{30}, \hat{m}_{31}$, the estimated inlet temperatures

$\hat{T}_{15}, \hat{T}_{23}, \hat{T}_{13}, \hat{T}_{21}$ and outlet temperatures $\hat{T}_{28}, \hat{T}_{29}, \hat{T}_{30}, \hat{T}_{31}$ and the pressure losses $\Delta P_{28}, \Delta P_{29}, \Delta P_{30}, \Delta P_{31}$ for each of the thermal devices G28, G29, G30, G31. As mentioned above, the aforesaid relation is also dependent on the states of actuation $s_{1,1}, ..., s_{1,p1}, s_{2,1}, ..., s_{2,p2}, ..., s_{m,1}, ..., s_{m,pm}$ of the solenoid valves $EV_{1,1}, ..., EV_{1,p1}, EV_{2,1}, ..., EV_{2,p2}, ..., EV_{m,1}, ..., EV_{m,pm}$. Using the nomenclature of Figure 1, we find the following equalities:

- for the user of the accommodation unit $U_1$:

$$\hat{Q}_{1,1} = \hat{\dot{m}}_{15} = \hat{\dot{m}}_{28}, \quad \hat{Q}_{1,2} = \hat{\dot{m}}_{23} = \hat{\dot{m}}_{29}$$

- for the user of the accommodation unit $U_2$:

$$\hat{Q}_{2,1} = \hat{\dot{m}}_{13a} = \hat{\dot{m}}_{30}, \quad \hat{Q}_{2,2} = \hat{\dot{m}}_{21a} = \hat{\dot{m}}_{31}$$

Consequently, the following formula is used to calculate the estimated exchanged thermal energy for the first thermal user associated with the accommodation unit $U_1$:

$$\hat{E}_1 = \hat{E}_{G30} + \hat{E}_{G31} = \int_0^{\Delta t_{TOT}} c_p * \hat{\dot{m}}_{30}(t)(\hat{T}_{13}(t) - \hat{T}_{30}(t))dt + \int_0^{\Delta t_{TOT}} c_p * \hat{\dot{m}}_{31}(t)(\hat{T}_{21}(t) - \hat{T}_{31}(t))dt$$

where $\hat{E}_{G30}$ represents the estimate of the thermal energy exchanged between the first thermal user and the heat exchanger device G30 in the period of time $\Delta t_{TOT}$,

where $\hat{E}_{G31}$ represents the estimate of the thermal energy exchanged between the first thermal user and the heat exchanger device G31 in the period of time $\Delta t_{TOT}$,

where $\hat{\dot{m}}_{30}(t)$ represents the variation as a function of time of the mass flow rate of heat carrier fluid flowing through and then out of the thermal device G30,

where $\hat{\dot{m}}_{31}(t)$ represents the variation as a function of time of the mass flow rate of heat carrier fluid flowing through and then out of the thermal device G31,

where $\hat{T}_{13}(t)$ represents the variation as a function of time of the temperature of the heat carrier fluid entering the thermal device G30,

where $\hat{T}_{30}(t)$ represents the variation as a function of time of the temperature of the heat carrier fluid flowing out of the thermal device G30,

where $\hat{T}_{21}(t)$ represents the variation as a function of time of the temperature of the heat carrier fluid entering the thermal device G31, and

where $\hat{T}_{31}(t)$ represents the variation as a function of time of the temperature of the heat carrier fluid flowing out of the thermal device G31.

Consequently, a further advantage of the present invention lies in the fact that the method and the system 10 according to the invention can be adapted automatically to the specific thermal installation I in which they are installed, by means of a procedure for identifying the thermal and fluid dynamic model M used. This is because the identification of a thermal and fluid dynamic model M which reproduces the behaviour of the heating installation I does not limit the installation to user complexes U of any predetermined type.

As will be clear to those skilled in the art, the system according to the present invention can be associated with a plurality of interrelated user complexes, for example in the case of a plurality of buildings which share the same heating installation. Depending on circumstances, it may be feasible to use either a single central control unit or a plurality of local control units hierarchically dependent on a single central supervision unit.

In variant embodiments of the present invention which are not illustrated, it is possible to provide a device for converting some of the kinetic and/or thermal energy of the heat carrier fluid flowing through the supply circuit to electrical energy to supply power to the system according to the invention. Indeed, one of the most promising applications of autonomous heat metering systems for central heating and/or cooling installations is their conversion into installations which are functionally autonomous in respect of the control of temperature and the actual estimation of the thermal consumption for each accommodation unit of the building or of the building complex. The most important constraint on the commercial development of these conversion systems is the power supply to the devices forming the control and metering system, and particularly to the electronic systems and actuators fitted to the heating units or to the internal supply ring. At present, the technologies used to supply power to these devices are:

- battery supply;
- mains supply.

The main drawbacks of the first solution are:

- the large quantity of batteries required to supply all the control devices of each accommodation unit;
- the rapid discharge rate of these batteries, which in many cases may become discharged even during their first season of use, despite the promises made by manufacturers;
- the financial and environmental impact of battery replacement;
- the difficulty of replacing the batteries, a task which is not easy for a substantial percentage of users who perceive the discharge of the batteries as "breakage of the device".

On the other hand, the drawbacks of mains supply are due to the fact that it may be necessary to convert central heating and/or cooling installations in old buildings which generally lack the conduits within the walls which would be required in order to run the electrical power line in a safe and concealed way to the heating units. This makes it necessary to provide external conduits, which may also be required for compliance with electrical safety standards, these conduits being attached to the wall between each heating unit and the nearest electrical outlet. This solution is:

- highly unattractive in visual terms and generally unacceptable to the end customer, and
- expensive in terms of cash and construction time.

An alternative solution to the two aforementioned methods for supplying power to the devices of the system may be to provide, for example, a microturbine with a rotor which is fitted in a portion of the supply circuit in which the heat carrier fluid strikes the rotor in a known way, thus rotating a shaft connected to the rotor, which in turn drives an electrical generator such as an alternator. By means of arrangements familiar to those skilled in the art, the electrical energy generated in this way is used to supply the components of the system directly or to charge batteries required for its operation. For example, such a turbine and alternator can be integrated in the solenoid valve device and its electronic system. Alternatively, or in order to supplement this method of supplying the devices, it is possible to use thermoelectric phenomena such as those used by thermocouples or the Peltier effect. In this way, the electronic systems and actuators of the solenoid valves can, for example, be supplied by directly converting the thermal energy of the heating units controlled by them to electrical energy.
Alternatively, but not exclusively, other methods for providing a local power supply to the devices of the system and to the solenoid valve devices if necessary are:

• magneto-fluid-dynamic or magnetohydrodynamic (MHD) generators which directly convert the movement of the heat carrier fluid, made electrically conducting by suitable chemical additives, to electrical energy, or
• a system which generates a pressure variation which alternates in time and is simultaneously common and equal in the delivery and main return parts of the supply circuit, in order to obtain, in addition to the differential head generated by the pump P of the installation I, an internal pressure of the supply circuit which is variable with respect to the external pressure in a uniform way throughout the circuit, and which is additional to that generated by the pump in all cases. This common variation, alternating in time, of the internal pressure of the circuit C can be converted to electrical energy by a suitable transducer mounted in any position of the supply circuit C and fitted to, or in the proximity of, one or more devices of the system to be supplied, including the solenoid valves. This transducer can be, for example, a mechanical system which is based on a piston moved by this common internal pressure variation in the circuit C with respect to the external pressure, and which drives a suitable electrical generator such as an alternator or a piezoelectric unit of known types.

In all the aforementioned cases, the electrical energy generated locally or in the vicinity of the device to be supplied by conversion of the kinetic or thermal energy of the heat carrier fluid flowing in the circuit C can be stored in suitable accumulators integrated into the devices to be supplied, such as the solenoid valves.
The system proposed by the invention is also compatible with the installation of suitable thermostat timer devices which also act as local control units (not shown) located in some or all of the accommodation units and designed to monitor and regulate the temperature in areas or sub-areas of the corresponding accommodation units to which they belong, by means of a controlled actuation of the solenoid valves of the thermal installation. Clearly, this arrangement does not create conflicts with the regular operation of the control unit of the installation fitted with the system.

Naturally, the principle of the invention remaining the same, the forms of embodiment and the details of construction may be varied widely with respect to those described and illustrated, which have been given purely by way of non-limiting example, without thereby departing from the scope of the invention as defined in the attached claims.

**Claims**

1. Virtual heat-meter system (10) for estimating the thermal energy exchanged between a plurality of heat exchanger devices ($H_{1,1}$, ..., $H_{1,n1}$, $H_{2,1}$, ..., $H_{2,n2}$, ..., $H_{m,1}$, ..., $H_{m,nm}$) of a central thermal installation (I) for generating and supplying thermal energy and a user complex (U) during a predetermined period of time ($\Delta t_{TOT}$);

   said user complex (U) including a plurality of thermal users ($U_1$, ..., $U_m$) to be monitored;

   said central thermal installation (I) including:

   - a supply circuit (C), adapted to have a heat carrier fluid passing through it and arranged for selectively assuming a plurality of operating configurations (s) in which it defines respective supply paths for said heat carrier fluid; and
   - a thermal unit (G) arranged for generating a desired variation in thermal energy in the heat carrier fluid flowing from the supply circuit C;
   - a pumping device (P) intended to create a forced circulation of said heat carrier fluid through said supply circuit (C);
   - a plurality of heat exchanger devices ($H_{1,1}$, ..., $H_{1,n1}$, $H_{2,1}$, ..., $H_{2,n2}$, $H_{m,1}$, ..., $H_{m,nm}$) connected to said supply circuit (C), allocated among said thermal users ($U_1$, ..., $U_m$), and intended to have said heat carrier fluid passing through them selectively according to the operating configuration assumed by said supply circuit (C), and adapted to allow the exchange of heat between said heat carrier fluid and said thermal users ($U_1$, ..., $U_m$);

   the system (10) whereby comprises:

   • first sensor means (12, 14, 16, 18, 20), adapted to be associated with the supply circuit (C) and arranged for supplying main signals ($Q_{man.}$, $T_{man.}$, $T_{rit.}$, $P_{man.}$, $P_{rit.}$, s) indicative of physical quantities representing the operation of said supply circuit (C) in said period of time ($\Delta t_{TOT}$),

   in which said main signals ($Q_{man.}$, $T_{man.}$, $T_{rit.}$, $P_{man.}$, $P_{rit.}$, s) comprise signals representing the following physical quantities:
   - the flow rate ($Q_{man}$) of heat carrier fluid flowing in a main delivery portion ($C_{man.}$) of the supply circuit (C);
   - a first and a second temperature ($T_{man.}$, $T_{rit.}$) of the heat carrier fluid in the main delivery portion ($C_{man.}$) and in the main return portion ($C_{rit.}$), respectively, of the supply circuit (C);
   - the operating configuration (s) assumed by the supply circuit (C); and
   - the pressure difference ($\Delta P$) which the heat carrier fluid has between the main delivery portion and the main return portion ($C_{rit.}$), respectively, of the supply circuit (C), and

   • control means (22) comprising:

   - memory means (23) arranged for storing data representing the variation of said main signals ($Q_{man.}$, $T_{man.}$, $T_{rit.}$, $P_{man.}$, $P_{rit.}$, s) in the period of time ($\Delta t_{TOT}$); and
   - processing means (24), arranged for receiving at their input said data representing the variation of said main signals ($Q_{man.}$, $T_{man.}$, $T_{rit.}$, $P_{man.}$, $P_{rit.}$, s) in the period of time ($\Delta t_{TOT}$) from said memory means (23), and configured to supply at their output data ($E_{1,1}$, ..., $E_{1,n1}$; $E_{2,1}$, ..., $\hat{E}_{2,n2}$; ...; $\hat{E}_{m,1}$, ..., $E_{m,nm}$) which represent the estimate of the thermal energy ($E_{1,1}$, ..., $E_{1,n1}$; $E_{2,1}$, ..., $E_{2,n2}$; ...; $E_{m,1}$, ..., $E_{m,nm}$) individually exchanged between each heat exchanger device ($H_{1,1}$, ..., $H_{1,n1}$; $H_{2,1}$, ..., $H_{2,n2}$; ...; $H_{m,1}$, ..., $H_{m,nm}$) and the corresponding thermal user ($U_1$, ..., $U_m$), **characterized in that** the memory means also comprise a thermal and fluid dynamic model (M) defined initially and representing the central thermal installation (I), identified on the basis of physical quantities representing the operation of the supply circuit (C) and the heat exchanger devices ($H_{1,1}$, ..., $H_{1,n1}$, $H_{2,1}$, ..., $H_{2,n2}$, ..., $H_{m,1}$, ..., $H_{m,nm}$), detected in specified conditions of operation and stimulation of the installation (I); and **in that** the processing means are configured to process said data according to the thermal and fluid dynamic model (M).

2. System according to Claim 1, in which the first sensor means (12, 14, 16, 18, 20) are arranged for detecting said main signals ($Q_{man.}$, $T_{man.}$, $T_{rit.}$, $P_{man.}$, $P_{rit.}$, s) only, and the processing means (24) are arranged for supplying said output data ($\hat{E}_{1,1}$, ..., $\hat{E}_{1,n1}$; $\hat{E}_{2,1}$, ..., $\hat{E}_{2,n2}$; ...; $\hat{E}_{m,1}$, ..., $\hat{E}_{m,nm}$) only as a function of said first data ($Q_{man.}$, $T_{man.}$, $T_{rit.}$, $P_{man.}$, $P_{rit.}$, s).

3. System according to Claim 1, in which the first sensor means (12, 14, 16, 18, 20) additionally comprise auxiliary sensor means designed to detect data indicative of further physical quantities relating to elements and components outside the supply circuit (C).

4. System according to any one of the preceding claims, additionally comprising a plurality of valve devices ($EV_{1,1}$, ..., $EV_{1,p1}$, $EV_{2,1}$, ..., $EV_{2,p2}$, ..., $EV_{m,1}$, ..., $EV_{m,pm}$) interposed between said supply circuit (C) and said heat exchanger devices ($H_{1,1}$, ..., $H_{1,n1}$, ..., $H_{2,1}$, ..., $H_{2,n2}$, ..., $H_{m,1}$, ..., $H_{m,nm}$) in such a way as to control the flow of the heat carrier fluid through said heat exchanger devices ($H_{1,1}$, ..., $H_{1,n1}$, ..., $H_{2,1}$, ..., $H_{2,n2}$, ..., $H_{m,1}$, ..., $H_{m,nm}$); said operating configurations being determined by the state of actuation of said valve devices ($EV_{1,1}$, ..., $EV_{1,p1}$, $EV_{2,1}$, ..., $EV_{2,p2}$, ..., $EV_{m,1}$, ..., $EV_{m,pm}$).

5. System according to any one of the preceding claims, additionally comprising identification means (28) arranged for identifying said thermal and fluid dynamic model (M) initially and to supply said thermal and fluid dynamic model (M) to said memory means (23).

6. System according to Claim 5, in which the first sensor means (12, 14, 16, 18, 20) additionally comprise secondary sensor means arranged for supplying to the identification means (28) secondary signals indicative of physical quantities representing the operation of said supply circuit (C) in other intermediate portions of the latter, said identification means (28) being arranged for:

   - setting a sequence of predetermined operating and stimulation configurations (s) in the supply circuit (C); and
   - identifying said initially defined thermal and fluid dynamic model (M) by detecting the variation of said main signals $Q_{man.}$, $T_{man.}$, $T_{rit.}$, $P_{man.}$, $P_{rit.}$, s(t) and of said secondary signals as a function of said sequence of operating configurations (s) and stimulation configurations set in the installation (I).

7. System according to any one of the preceding claims, in which said secondary sensors can be mounted removably with respect to said installation (I).

8. System according to any one of the preceding claims, additionally comprising converter means for converting the thermal and/or kinetic energy of the heat carrier fluid flowing in the supply circuit (C) to electrical energy intended to supply power locally to at least one element of said system.

9. System according to Claim 8, in which the converter means comprise microturbines for converting the kinetic energy of the heat carrier fluid to electrical energy.

10. System according to Claim 8, in which the converter means comprise a magneto-fluid-dynamic or magnetohydrodynamic conversion unit, whereby the heat carrier fluid is made electrically conducting by the addition of suitable chemical additives.

11. System according to Claim 8, in which the converter means comprise a unit for direct conversion of the thermal energy which can be extracted from the heat carrier fluid or from the surfaces of the heat exchanger elements to electrical energy.

12. System according to Claim 8, in which the converter means comprise a system for creating a common and uniform variation in time of the internal pressure of the supply circuit (C) with respect to that of the external environment, in addition to the differential pressure generated by the pump P which is variable in time, the system including a plurality of transducer devices positioned along the supply circuit (C) in association with the elements to be supplied, these devices being adapted to convert said pressure variation to electrical energy.

13. Method for estimating the thermal energy exchanged between a plurality of heat exchanger devices ($H_{1,1}$, ..., $H_{1,n1}$, $H_{2,1}$, ..., $H_{2,n2}$, ..., $H_{m,1}$, ..., $H_{m,nm}$) of a central thermal installation (I) for generating and supplying thermal energy and a user complex (U) during a predetermined period of time ($\Delta t_{TOT}$);
said user complex (U) including a plurality of thermal users ($U_1$, ..., $U_m$) to be monitored;
said central thermal installation (I) including:

- a supply circuit (C), adapted to have a heat carrier fluid passing through it and arranged for selectively assuming a plurality of operating configurations (s) in which it defines respective supply paths for said heat carrier fluid; and
- a thermal unit (G) arranged for generating a desired variation in thermal energy in the heat carrier fluid received from the supply circuit (C);
- a pumping device (P) intended to create a forced circulation of said heat carrier fluid through said supply circuit (C);
- a plurality of heat exchanger devices ($H_{1,1}$, ..., $H_{1,n1}$, $H_{2,1}$, $H_{2,n2}$, ..., $H_{m,1}$, ..., $H_{m,nm}$) connected to said supply circuit (C), allocated among said thermal users ($U_1$, ..., $U_m$), and intended to have said heat carrier fluid passing through them selectively according to the operating configuration assumed by said supply circuit (C), and adapted to allow the exchange of heat between said heat carrier fluid and said thermal users ($U_1$, ..., $U_m$);

the method comprising the following operational steps:

- detecting, for a predetermined period of time ($\Delta t_{TOT}$), main signals ($Q_{man.}$, $T_{man.}$, $T_{rit.}$, $P_{man.}$, $P_{rit.}$, s) indicative of the operation of said supply circuit (C) and storing data representing the variation in the period of time ($\Delta t_{TOT}$) of said main signals ($Q_{man.}$, $T_{man.}$, $T_{rit.}$, $P_{man.}$, $P_{rit.}$, s),

in which said main signals ($Q_{man.}$, $T_{man.}$, $T_{rit.}$, $P_{man.}$, $P_{rit.}$, s) comprise signals representing the following physical quantities:

- the flow rate of heat carrier fluid flowing in a main delivery portion ($C_{man.}$) of the supply circuit (C);
- a first and a second temperature ($T_{man.}$, $T_{rit.}$) of the heat carrier fluid in the main delivery portion ($C_{man.}$) and in the main return portion ($C_{rit.}$), respectively, of the supply circuit (C);
- the operating configuration (s) assumed by the supply circuit (C); and
- the pressure difference ($\Delta P$) which the heat carrier fluid has between the main delivery portion and the main return portion ($C_{rit.}$), respectively, of the supply circuit (C);
- processing said data representing the variation of said main signals ($Q_{man.}$, $T_{man.}$, $T_{rit.}$, $P_{man.}$, $P_{rit.}$, s) in the period of time ($\Delta t_{TOT}$) to supply at the output the data ($\hat{E}_{1,1}$, $\hat{E}_{1,n1}$; $\hat{E}_{2,1}$, ..., $\hat{E}_{2,n2}$; ...; $\hat{E}_{m,1}$, ..., $\hat{E}_{m,nm}$) which represent the estimate of the thermal energy ($E_{1,1}$, ..., $E_{1,n1}$; $E_{2,1}$, ..., $E_{2,n2}$; ...; $E_{m,1}$, ..., $E_{m,nm}$) individually exchanged between each heat exchanger device ($H_{1,1}$, ..., $H_{1,n1}$; $H_{2,1}$, ..., $H_{2,n2}$; ...; $H_{m,1}$, ..., $H_{m,nm}$) and the corresponding thermal user ($U_1$, ..., $U_m$),
**characterized in that**
the method further comprises a step of

- identifying and storing a thermal and fluid dynamic model (M) structurally and topologically representing the installation (I), on the basis of physical quantities representing the operation of the supply circuit (C) and the heat exchanger devices ($H_{1,1}$, ..., $H_{1,n1}$, $H_{2,1}$, ..., $H_{2,n2}$, ..., $H_{m,1}$, ..., $H_{m,nm}$), detected in specified conditions of operation and stimulation of the installation (I);

and **in that**
the processing of said data is performed according to the thermal and fluid dynamic model (M).


## Patentansprüche

1. Virtuelles Wärmemesssystem (10) zur Schätzung der thermischen Energie, die zwischen einer Vielzahl von Wärmetauschergeräten ($H_{1,1}$, ..., $H_{1,n1}$, $H_{2,1}$, ..., $H_{2,n2}$, ..., $H_{m,1}$, ..., $H_{m,nm}$) einer zentralen thermischen Installation (I) zur Erzeugung und Versorgung thermischer Energie und eine Benutzeranlage (U) während einer vorbestimmten Zeitperiode ($\Delta t_{TOT}$) ausgetauscht wird;
die Benutzeranlage (U) enthält eine Vielzahl von zu überwachenden thermischen Benutzern ($U_1$, ..., $U_m$);
die zentrale thermische Installation (I) enthält:

- einen Versorgungskreislauf (C), angepasst zum Durchfluss eines Wärmeträgerfluids durch diesen und eingerichtet zur selektiven Übernahme einer Vielzahl von Betriebskonfigurationen (s) in welchen der Versorgungskreislauf (C) einzelne Versorgungspfade für das Wärmeträgerfluid definiert; und
- eine thermische Einheit (G), eingerichtet zur Erzeugung einer gewünschten Veränderung der thermischen Energie des in dem Versorgungskreislauf (C) fließenden Wärmeträgerfluids;
- ein Pumpgerät (P), vorgesehen zur Erzeugung einer erzwungenen Zirkulation des Wärmeträgerfluids durch den Versorgungskreislauf (C);
- eine Vielzahl von mit dem Versorgungskreislauf (C) verbundenen Wärmetauschergeräten ($H_{1,1}$, ..., $H_{1,n1}$, $H_{2,1}$, ..., $H_{2,n2}$, ..., $H_{m,1}$, ..., $H_{m,nm}$), die zwischen den thermischen Verbrauchern ($U_1$, ..., $U_m$) zugeteilt sind, und bestimmt zum Durchfluss des Wärmeträgerfluids durch diese, selektiv entsprechend der von dem Versorgungskreislauf (C) übernommenen Betriebskonfiguration, und angepasst, um den Austausch von Wärme zwischen dem Wärmeträgerfluid und den thermischen Benutzern ($U_1$, ..., $U_m$) zu erlauben;
wobei das System (10) umfasst:
- erste Sensormittel (12, 14, 16, 18, 20), angepasst, um mit dem Versorgungskreislauf (C) verbunden zu werden und eingerichtet zur Lieferung von Hauptsignalen ($Q_{man.}$, $T_{man.}$, $T_{rit.}$, $P_{man.}$, $P_{rit.}$, s), die physikalische Größen anzeigen, welche den Betrieb des Versorgungskreislaufs (C) in der Zeitperiode ($\Delta t_{TOT}$) repräsentieren,
wobei die Hauptsignale ($Q_{man.}$, $T_{man.}$, $T_{rit.}$, $P_{man.}$, $P_{rit.}$, s) Signale umfassen, welche die folgenden physikalischen Größen repräsentieren:

die Flussrate ($Q_{man.}$) des in einem Hauptzufuhrteilbereich ($C_{man.}$) des Versorgungskreislaufs (C) fließenden Wärmeträgerfluids;
eine erste und zweite Temperatur ($T_{man.}$, $T_{rit.}$) des Wärmeträgerfluids in jeweils dem Hauptzufuhrteilbereich ($C_{man.}$) und in dem Hauptrückführteilbereich ($C_{rit.}$) des Versorgungskreislaufs (C);
die Betriebskonfiguration (s), die von dem Versorgungskreislauf (C) angenommen wird;
die Druckdifferenz ($\Delta P$), die das Wärmeträgerfluid jeweils zwischen dem Hauptzufuhrteilbereich und dem Hauptrückführteilbereich ($C_{rit.}$) des Versorgungskreislaufs (C) hat, und

Steuermittel (22) umfassend:

Speichermittel (23), eingerichtet zum Speichern von Daten, anzeigend die Veränderung der Hauptsignale ($Q_{man.}$, $T_{man.}$, $T_{rit.}$, $P_{man.}$, $P_{rit.}$, s) in der Zeitperiode ($\Delta t_{TOT}$); und
Verarbeitungsmittel (24), eingerichtet zum Empfang der die Veränderung der Hauptsignale ($Q_{man.}$, $T_{man.}$, $T_{rit.}$, $P_{man.}$, $P_{rit.}$, s) in der Zeitperiode ($\Delta t_{TOT}$) repräsentierenden Daten von dem Speichermittel (23) an dessen Eingang, und konfiguriert zur Ausgabe von Daten ($\hat{E}_{1,1}$,... $\hat{E}_{1,n1}$; $\hat{E}_{2,1}$, ..., $\hat{E}_{2,n2}$;...; $\hat{E}_{m,1}$, ..., $\hat{E}_{m,nm}$) an dessen Ausgang, die die Schätzung der thermischen Energie ($E_{1,1}$, ..., $E_{1,n1}$; $E_{2,1}$, ..., $E_{2,n2}$; ... $E_{m,1}$, ..., $E_{m,nm}$) repräsentieren, die einzeln zwischen jedem Wärmetauschergerät ($H_{1,1}$, ..., $H_{1,n1}$, $H_{2,1}$, ..., $H_{2,n2}$, ..., $H_{m,1}$, ..., $H_{m,nm}$) und dem zugehörigen thermischen Nutzer ($U_1$..., $U_m$) ausgetauscht wird,

**dadurch gekennzeichnet,**
**dass** die Speichermittel ebenfalls umfassen
ein thermisches und fluiddynamisches Modell (M), welches anfänglich definiert ist und die zentrale thermische Installation (I) repräsentiert, identifiziert auf der Basis von physikalischen Größen, die den Betrieb des Versorgungskreislaufs (C) und der Wärmetauschergeräte ($H_{1,1}$, ..., $H_{1,n1}$, $H_{2,1}$, ..., $H_{2,n2}$, ..., $H_{m,1}$, ..., $H_{m,nm}$) repräsentieren, die unter spezifizierten Betriebs- und Stimulationsbedienungen der Installation (I) ermittelt wurden; und
**dass** die Verarbeitungsmittel konfiguriert sind, um die Daten entsprechend dem thermischen und fluiddynamischen Modell (M) zu verarbeiten.

2. System nach Anspruch 1,
wobei die ersten Sensormittel (12, 14, 16, 18, 20) eingerichtet sind zur Erfassung nur der Hauptsignale ($Q_{man.}$, $T_{man.}$, $T_{rit.}$, $P_{man.}$, $P_{rit.}$, s) und die Verarbeitungsmittel (24) eingerichtet sind zur Lieferung nur der Ausgangsdaten ($\hat{E}_{1,1}$,... $\hat{E}_{1,n1}$; $\hat{E}_{2,1}$, ..., $\hat{E}_{2,n2}$;...; $\hat{E}_{m,1}$, ..., $\hat{E}_{m,nm}$) als Funktion der ersten Daten ($Q_{man.}$, $T_{man.}$, $T_{rit.}$, $P_{man.}$, $P_{rit.}$, s).

3. System nach Anspruch 1,
wobei die ersten Sensormittel (12, 14, 16, 18, 20) zusätzlich Hilfssensormittel umfassen, die ausgebildet sind, um Daten zu erfassen, die weitere physikalische Größen im Zusammenhang mit Elementen und Komponenten außerhalb des Versorgungskreislaufs (C) bezeichnen.

4. System nach irgendeinem der vorhergehenden Ansprüche,
zusätzlich umfassend eine Vielzahl von Ventilgeräten ($EV_{1,1}$, ..., $EV_{1,p1}$, $EV_{2,1}$, ... $EV_{2,p2}$, ..., $EV_{m,1}$, ..., $EV_{m,pm}$), die zwischen dem Versorgungskreislauf (C) und den Wärmetauschergeräten ($H_{1,1}$, ..., $H_{1,n1}$, $H_{2,1}$, ..., $H_{2,n2}$, ..., $H_{m,1}$, ...,

$H_{m,nm}$) derart zwischengeschaltet sind, um den Fluss des Wärmeträgerfluids durch die Wärmetauschergeräte ($H_{1,1}$, ..., $H_{1,n1}$, $H_{2,1}$, ..., $H_{2,n2}$, ..., $H_{m,1}$, ..., $H_{m,nm}$) zu steuern; wobei die Betriebskonfigurationen durch den Betriebsstatus der Ventilgeräte ($EV_{1,1}$, ..., $EV_{1,p1}$, $EV_{2,1}$, ... $EV_{2,p2}$, ..., $EV_{m,1}$, ..., $EV_{m,pm}$) bestimmt sind.

5. System nach irgendeinem der vorhergehenden Ansprüche,
   zusätzlich umfassend Identifikationsmittel (28), die eingerichtet sind zur anfänglichen Identifizierung des thermischen und fluiddynamischen Modells (M) und zur Bereitstelllung des thermischen und fluiddynamischen Modells (M) für die Speichermittel (23).

6. System nach Anspruch 5,
   wobei die ersten Sensormittel (12, 14, 16, 18, 20) zusätzlich zweite Sensormittel umfassen, die eingerichtet sind zur Bereitstellung von zweiten Signalen für die Identifikationsmittel (28), wobei die zweiten Signale physikalische Größen bezeichnen, welche den Betrieb des Versorgungskreislaufs (C) in anderen Zwischenteilbereichen des letzteren repräsentieren, wobei die Identifikationsmittel (28) eingerichtet sind zum:

   - Festlegen einer Sequenz von vorbestimmten Betriebs- und Stimulationskonfigurationen (s) in dem Versorgungskreislauf (C); und
   - Identifizieren des anfänglich definierten thermischen und fluiddynamischen Modells (M) durch Erfassen der Veränderung der Hauptsignale ($Q_{man.}$, $T_{man.}$, $T_{rit.}$, $P_{man.}$, $P_{rit.}$, s) und der zweiten Signale als eine Funktion der Sequenz von in der Installation (I) festgelegten Betriebskonfigurationen (s) und Stimulationskonfigurationen.

7. System nach irgendeinem der vorhergehenden Ansprüche,
   wobei die zweiten Sensoren in Bezug zu der Installation (I) entfernbar montiert werden können.

8. System nach irgendeinem der vorhergehenden Ansprüche,
   zusätzlich umfassend Konvertermittel zur Konvertierung der thermischen und/oder kinetischen Energie des in dem Versorgungskreislauf (C) fließenden Wärmeträgerfluids in elektrische Energie, in der Absicht Energie lokal an zumindest ein Element des Systems zu liefern.

9. System nach Anspruch 8,
   wobei die Konvertermittel Mikroturbinen zur Konvertierung der kinetischen Energie des Wärmeträgerfluids in elektrische Energie umfassen.

10. System nach Anspruch 8,
    wobei die Konvertermittel eine Magnet-Fluid-dynamische oder Magnethydrodynamische Umwandlungseinheit umfassen, wobei das Wärmeträgerfluid durch den Zusatz von geeigneten chemischen Additiven elektrisch leitend gemacht ist.

11. System nach Anspruch 8,
    wobei die Konvertermittel eine Einheit zur direkten Umwandlung der thermischen Energie in elektrische Energie umfassen, wobei die thermische Energie aus dem Wärmeträgerfluid oder von den Oberflächen der Wärmetauscherelemente entzogen wird.

12. System nach Anspruch 8,
    wobei die Konvertermittel ein System umfassen, zur Bildung einer gemeinsamen und einheitlichen Zeitabweichung des internen Drucks des Versorgungskreislaufs (C) in Bezug zu dem der äußeren Umgebung, zusätzlich zu dem differentiellen Druck, der durch die Pumpe P erzeugt wird und zeitveränderlich ist, das System umfasst eine Vielzahl von Übertragungsgeräten, die entlang des Versorgungskreislaufs (C) in Verbindung mit den zu versorgenden Elementen angeordnet sind, wobei diese Geräte ausgebildet sind, um die Druckveränderung in elektrische Energie zu verwandeln.

13. Verfahren zur Schätzung der thermischen Energie, die zwischen einer Vielzahl von Wärmetauschergeräten ($H_{1,1}$, ..., $H_{1,n1}$, $H_{2,1}$, ..., $H_{2,n2}$, ..., $H_{m,1}$, ..., $H_{m,nm}$) einer zentralen thermischen Installation (I) zur Erzeugung und Versorgung thermischer Energie und einer Benutzeranlage (U) während einer vorbestimmten Zeitperiode ($\Delta t_{TOT}$) ausgetauscht wird;
    die Benutzeranlage (U) enthält eine Vielzahl von zu überwachenden thermischen Benutzern ($U_1$, ..., $U_m$);
    die zentrale thermische Installation (I) enthält:

- einen Versorgungskreislauf (C), angepasst zum Durchfluss eines Wärmeträgerfluids durch diesen und eingerichtet zur selektiven Übernahme einer Vielzahl von Betriebskonfigurationen (s) in welchen der Versorgungskreislauf (C) einzelne Versorgungspfade für das Wärmeträgerfluid definiert; und

- eine thermische Einheit (G), eingerichtet zur Erzeugung einer gewünschten Veränderung der thermischen Energie des in dem Versorgungskreislauf (C) fließenden Wärmeträgerfluids;

- ein Pumpgerät (P), vorgesehen zur Erzeugung einer erzwungenen Zirkulation des Wärmeträgerfluids durch den Versorgungskreislauf (C);

eine Vielzahl von mit dem Versorgungskreislauf (C) verbundenen Wärmetauschergeräten ($H_{1,1}$, ..., $H_{1,n1}$, $H_{2,1}$, ..., $H_{2,n2}$, ..., $H_{m,1}$, ..., $H_{m,nm}$), die zwischen den thermischen Verbrauchern ($U_1$, ..., $U_m$), zugeteilt sind, und bestimmt zum Durchfluss des Wärmeträgerfluids durch diese, selektiv entsprechend der von dem Versorgungskreislauf (C) übernommenen Betriebskonfiguration, und angepasst, um den Austausch von Wärme zwischen dem Wärmeträgerfluid und den thermischen Benutzern ($U_1$, ..., $U_m$) zu erlauben,

das Verfahren umfasst die folgenden Betriebsschritte:

- Erfassung von Hauptsignalen ($Q_{man.}$, $T_{man.}$, $T_{rit.}$, $P_{man.}$, $P_{rit.}$, s) während einer vorbestimmten Zeitperiode ($\Delta t_{TOT}$), welche den Betrieb des Versorgungskreislaufs (C) anzeigen und Speicherung von Daten, welche die Veränderung der Hauptsignale ($Q_{man.}$, $T_{man.}$, $T_{rit.}$, $P_{man.}$, $P_{rit.}$, s) in der Zeitperiode ($\Delta t_{TOT}$) repräsentieren, wobei die Hauptsignale ($Q_{man.}$, $T_{man.}$, $T_{rit.}$, $P_{man.}$, $P_{rit.}$, s) Signale umfassen, welche die folgenden physikalischen Größen repräsentieren:

- die Flussrate des in einem Hauptzufuhrteilbereich ($C_{man.}$) des Versorgungskreislaufs (C) fließenden Wärmeträgerfluids;

- eine erste und zweite Temperatur ($T_{man.}$, $T_{rit.}$) des Wärmeträgerfluids jeweils in dem Hauptzufuhrteilbereich ($C_{man.}$) und in dem Hauptrückführteilbereich ($C_{rit.}$) des Versorgungskreislaufs (C);

- die Betriebskonfiguration (s), die von dem Versorgungskreislauf (C) angenommen wird;

- die Druckdifferenz ($\Delta P$), die das Wärmeträgerfluid jeweils zwischen dem Hauptzuführteilbereich und dem Hauptrückführteilbereich ($C_{rit.}$) des Versorgungskreislaufs (C) hat:

- Verarbeitung der Daten, welche die Veränderung der Hauptsignale ($Q_{man.}$, $T_{man.}$, $T_{rit.}$, $P_{man.}$, $P_{rit.}$, s) in der Zeitperiode ($\Delta t_{TOT}$) repräsentieren, um die Daten ($\hat{E}_{1,1}$,... $\hat{E}_{1,n1}$; $\hat{E}_{2,1}$, ..., $\hat{E}_{2,n2}$;...; $\hat{E}_{m,1}$, ..., $\hat{E}_{m,nm}$) an dem Ausgang bereitzustellen, welche die Schätzung der thermischen Energie ($E_{1,1}$, ..., $E_{1,n1}$; $E_{2,1}$, ..., $E_{2,n2}$; ... $E_{m,1}$, ..., $E_{m,nm}$) repräsentieren, die individuell zwischen jedem Wärmetauschergerät ($H_{1,1}$, ..., $H_{1,n1}$, $H_{2,1}$, ..., $H_{2,n2}$, ..., $H_{m,1}$, ..., $H_{m,nm}$) und den entsprechenden thermischen User ($U_1$, ..., $U_m$) ausgetauscht wurde;

**dadurch gekennzeichnet,**

**dass** das Verfahren des Weiteren die Schritte umfasst:

Identifizierung und Speicherung eines thermischen und fluiddynamischen Modells (M), welches strukturell und topologisch die Installation (I) repräsentiert, auf der Basis von physikalischen Werten, welche den Betrieb des Versorgungskreislaufs (C) und der Wärmetauschergeräte ($H_{1,1}$, ..., $H_{1,n1}$, $H_{2,1}$, ..., $H_{2,n2}$, ..., $H_{m,1}$, ..., $H_{m,nm}$) repräsentiert, die in genau festgelegten Betriebs- und Stimulationsbedingungen der Installation (I) erfasst wurden;

und **dass** die Verarbeitung dieser Daten entsprechend des thermischen und fluiddynamischen Modells (M) ausgeführt wird.

**Revendications**

1. Système compteur de chaleur virtuel (10) destiné à évaluer l'énergie thermique échangée entre une pluralité de dispositifs échangeurs de chaleur ($H_{1,1}$, ..., $H_{1,n1}$ $H_{2,1}$, ..., $H_{2,n2}$, ..., $H_{m,1}$, ..., $H_{m,nm}$) d'une installation thermique centrale (I), destinée à générer et distribuer de l'énergie thermique, et un complexe utilisateur (U) pendant un laps de temps ($\Delta t_{TOT}$) prédéterminé;

ledit complexe utilisateur (U) comprenant une pluralité d'utilisateurs thermiques ($U_1$, ..., $U_m$) devant être surveillés;

ladite installation thermique centrale (I) comportant :

- un circuit d'alimentation (C) adapté pour laisser passer un fluide caloporteur et agencé pour adopter de manière sélective une pluralité de configurations de fonctionnement (s) dans lesquelles il définit des chemins d'alimentation respectifs pour ledit fluide caloporteur; et

- une unité thermique (G) agencée pour générer une variation souhaitée de l'énergie thermique dans le fluide caloporteur s'écoulant depuis le circuit d'alimentation C;

- un dispositif de pompage (P) destiné à créer une circulation forcée dudit fluide caloporteur à travers ledit circuit d'alimentation (C);
- une pluralité de dispositifs échangeurs de chaleur ($H_{1,1}$, ..., $H_{1,n1}$, $H_{2,1}$, ..., $H_{2,n2}$, ..., $H_{m,1}$, ..., $H_{m,nm}$) connectés audit circuit d'alimentation (C), affectés parmi lesdits utilisateurs thermiques ($U_1$, ..., $U_m$) et destinés à laisser passer ledit fluide caloporteur de façon sélective en fonction de la configuration de fonctionnement adoptée par ledit circuit d'alimentation (C), et adaptés pour permettre l'échange de chaleur entre ledit fluide caloporteur et lesdits utilisateurs thermiques ($U_1$, ..., $U_m$);
où le système (10) comprend :

> • des premiers moyens formant capteurs (12, 14, 16, 18, 20), adaptés pour être associés au circuit d'alimentation (C) et agencés pour fournir des signaux principaux ($Q_{man.}$, $T_{man.}$, $T_{rit.}$, $P_{man.}$, $P_{rit.}$, s) indicatifs de quantités physiques représentant le fonctionnement dudit circuit d'alimentation (C) dans ledit laps de temps ($\Delta t_{TOT}$),

dans lequel lesdits signaux principaux ($Q_{man.}$, $T_{man.}$, $T_{rit.}$, $P_{man.}$, $P_{rit.}$, s) comprennent des signaux représentant les quantités physiques suivantes :

- le débit ($Q_{man}$) du fluide caloporteur dans une partie de distribution principale ($C_{man.}$) du circuit d'alimentation (C);
- une première et une deuxième température ($T_{man.}$, $T_{rit.}$) du fluide caloporteur respectivement dans la partie de distribution principale ($C_{man.}$) et dans la partie de retour principale ($C_{rit.}$) du circuit d'alimentation (C);
- la configuration de fonctionnement (s) adoptée par le circuit d'alimentation (C); et
- la différence de pression ($\Delta P$) que présente le fluide caloporteur respectivement entre la partie de distribution principale et la partie de retour principale ($C_{rit.}$) du circuit d'alimentation (C);
et

> • un moyen de commande (22) comprenant :
>
> > - des moyens formant mémoire (23) agencés pour stocker des données représentant la variation desdits signaux principaux ($Q_{man.}$, $T_{man.}$, $T_{rit.}$, $P_{man.}$, $P_{rit.}$, s) dans le laps de temps ($\Delta t_{TOT}$); et
> > - des moyens de traitement (24), agencés pour recevoir à leur entrée lesdites données représentant la variation desdits signaux principaux ($Q_{man.}$, $T_{man.}$, $T_{rit.}$, $P_{man.}$, $P_{rit.}$, s) dans le laps de temps ($\Delta t_{TOT}$), depuis lesdits moyens formant mémoire (23), et configurés pour délivrer à leur sortie des données ($\hat{E}_{1,1}$, ..., $\hat{E}_{1,n1}$; $\hat{E}_{2,1}$, ..., $\hat{E}_{2,n2}$; ...; $\hat{E}_{m,1}$, ..., $\hat{E}_{m,nm}$) qui représentent la valeur estimée de l'énergie thermique ($E_{1,1}$, ..., $E_{1,n1}$; $E_{2,1}$, ..., $E_{2,n2}$; ...; $E_{m,1}$, ..., $E_{m,nm}$) échangée individuellement entre chaque dispositif échangeur de chaleur ($H_{1,1}$, ..., $H_{1,n1}$, $H_{2,1}$, ..., $H_{2,n2}$, ..., $H_{m,1}$, ..., $H_{m,nm}$) et l'utilisateur thermique ($U_1$, ..., $U_m$) correspondant, **caractérisé en ce que** les moyens formant mémoire comprennent également

un modèle dynamique thermique et fluide (M) défini initialement et représentant l'installation thermique centrale (I), identifié sur la base de quantités physiques représentant le fonctionnement du circuit d'alimentation (C) et des dispositifs échangeurs de chaleur ($H_{1,1}$, ..., $H_{1,n1}$, $H_{2,1}$, ..., $H_{2,n2}$, ..., $H_{m,1}$, ..., $H_{m,nm}$), détecté dans des conditions spécifiées de fonctionnement et de stimulation de l'installation (I); et **en ce que** les moyens de traitement sont configurés pour traiter lesdites données conformément au modèle dynamique thermique et fluide (M).

2. Système selon la revendication 1, dans lequel les premiers moyens formant capteurs (12, 14, 16, 18, 20) sont agencés pour détecter uniquement lesdits signaux principaux ($Q_{man.}$, $T_{man.}$, $T_{rit.}$, $P_{man.}$, $P_{rit.}$, s), et les moyens de traitement (24) sont agencés pour fournir uniquement lesdites données de sortie ($\hat{E}_{1,1}$, ..., $\hat{E}_{1,n1}$; $\hat{E}_{2,1}$, ..., $\hat{E}_{2,n2}$; ...; $\hat{E}_{m,1}$, ..., $\hat{E}_{m,nm}$) en tant que fonction desdites premières données ($Q_{man.}$, $T_{man.}$, $T_{rit.}$, $P_{man.}$, $P_{rit.}$, s).

3. Système selon la revendication 1, dans lequel les premiers moyens formant capteurs (12, 14, 16, 18, 20) comprennent en plus des moyens formant capteurs auxiliaires, conçus pour détecter les données indicatives de quantités physiques supplémentaires en relation avec des éléments et des composants situés à l'extérieur du circuit d'alimentation (C).

4. Système selon l'une quelconque des revendications précédentes, comprenant en outre une pluralité de dispositifs à vanne ($EV_{1,1}$, ..., $EV_{1,p1}$, $EV_{2,1}$, ..., $EV_{2p2}$, ..., $EV_{m,1}$, ..., $EV_{m,pm}$) disposés entre ledit circuit d'alimentation (C) et lesdits dispositifs échangeurs de chaleur ($H_{1,1}$, ..., $H_{1,n1}$, ..., $H_{2,1}$, ..., $H_{2,n2}$, ..., $H_{m,1}$, ..., $H_{m,nm}$), de manière à commander le débit du fluide caloporteur à travers lesdits dispositifs échangeurs de chaleur ($H_{1,1}$, ..., $H_{1,n1}$, ..., $H_{2,1}$, ..., $H_{2,n2}$, ..., $H_{m,1}$, ..., $H_{m,nm}$); lesdites configurations de fonctionnement étant déterminées par l'état d'activation desdits dispositifs à vanne ($EV_{1,1}$, ..., $EV_{1,p1}$, $EV_{2,1}$, ..., $EV_{2p2}$, ..., $EV_{m,1}$, ..., $EV_{m,pm}$).

**5.** Système selon l'une quelconque des revendications précédentes, comprenant en outre des moyens d'indication (28) agencés pour identifier initialement ledit modèle dynamique thermique et fluide (M) et pour fournir ledit modèle dynamique thermique et fluide (M) auxdits moyens formant mémoire (23).

**6.** Système selon la revendication 5, dans lequel les premiers moyens formant capteurs (12, 14, 16, 18, 20) comprennent en plus des moyens formant capteurs secondaires, agencés pour fournir au moyen d'identification (28) des signaux secondaires indicatifs des quantités physiques représentant le fonctionnement dudit circuit d'alimentation (C) dans d'autres parties intermédiaires de celui-ci, ledit moyen d'identification (28) étant agencé pour :

- établir une séquence de configurations de fonctionnement et de stimulation (s) prédéterminées dans le circuit d'alimentation (C); et
- identifier ledit modèle dynamique thermique et fluide (M) initialement défini, en détectant la variation desdits signaux principaux $Q_{man.}$, $T_{man.}$, $T_{rit.}$, $P_{man.}$, $P_{rit.}$, s(t) et desdits signaux secondaires en tant que fonction de ladite séquence de configurations de fonctionnement (s) et de configurations de stimulation établies dans l'installation (I).

**7.** Système selon l'une quelconque des revendications précédentes, dans lequel lesdits deuxièmes capteurs peuvent être montés de façon amovible par rapport à ladite installation (I).

**8.** Système selon l'une quelconque des revendications précédentes, comprenant en plus des moyens convertisseurs pour convertir l'énergie thermique et/ou cinétique du fluide caloporteur, s'écoulant dans le circuit d'alimentation (C), en énergie électrique destinée à alimenter en courant localement au moins un élément dudit système.

**9.** Système selon la revendication 8, dans lequel les moyens convertisseurs comprennent des microturbines pour convertir l'énergie cinétique du fluide caloporteur en énergie électrique.

**10.** Système selon la revendication 8, dans lequel les moyens convertisseurs comprennent une unité de conversion magnéto-fluide-dynamique ou magnétohydrodynamique, grâce à laquelle le fluide caloporteur est rendu électriquement conducteur par ajout d'additifs chimiques appropriés.

**11.** Système selon la revendication 8, dans lequel les moyens convertisseurs comprennent une unité pour la conversion directe de l'énergie thermique qui peut être extraite du fluide caloporteur ou des surfaces des éléments échangeurs de chaleur, en énergie électrique.

**12.** Système selon la revendication 8, dans lequel les moyens convertisseurs comprennent un système pour créer une variation dans le temps, commune et uniforme, de la pression interne du circuit d'alimentation (C) par rapport à celle de l'environnement externe, en plus de la pression différentielle générée par la pompe P qui est variable dans le temps, le système comprenant une pluralité de dispositifs transducteurs positionnés le long du circuit d'alimentation (C) en association avec les éléments devant être alimentés, ces dispositifs étant adaptés pour convertir ladite variation de pression en énergie électrique.

**13.** Procédé pour évaluer l'énergie thermique échangée entre une pluralité de dispositifs échangeurs de chaleur ($H_{1,1}$, ..., $H_{1,n1}$, $H_{2,1}$, ..., $H_{2,n2}$, ..., $H_{m,1}$, ..., $H_{m,nm}$) d'une installation thermique centrale (I), destinée à générer et distribuer de l'énergie thermique, et un complexe utilisateur (U) pendant un laps de temps ($\Delta t_{TOT}$) prédéterminé ;
ledit complexe utilisateur (U) comprenant une pluralité d'utilisateurs thermiques ($U_1$, ..., $U_m$) devant être surveillés; ladite installation thermique centrale (I) comportant:

- un circuit d'alimentation (C) adapté pour laisser passer un fluide caloporteur, et agencé pour adopter de manière sélective une pluralité de configurations de fonctionnement (s) dans lesquelles il définit des chemins d'alimentation respectifs pour ledit fluide caloporteur; et
- une unité thermique (G) agencée pour générer une variation souhaitée de l'énergie thermique dans le fluide caloporteur reçu du circuit d'alimentation (C);
- un dispositif de pompage (P) destiné à créer une circulation forcée dudit fluide caloporteur à travers ledit circuit d'alimentation (C);
- une pluralité de dispositifs échangeurs de chaleur ($H_{1,1}$, ..., $H_{1,n1}$, $H_{2,1}$, ..., $H_{2,n2}$, ..., $H_{m,1}$, ..., $H_{m,nm}$) connectés audit circuit d'alimentation (C), affectés parmi lesdits utilisateurs thermiques ($U_1$, ..., $U_m$) et destinés à laisser passer ledit fluide caloporteur de façon sélective en fonction de la configuration de fonctionnement adoptée par ledit circuit d'alimentation (C), et adaptés pour permettre l'échange de chaleur entre ledit fluide caloporteur et lesdits utilisateurs thermiques ($U_1$, ..., $U_m$);

le procédé comprenant les étapes de fonctionnement suivantes :

- la détection, pendant un laps de temps ($\Delta t_{TOT}$) prédéterminé, de signaux principaux ($Q_{man.}$, $T_{man.}$, $T_{rit.}$, $P_{man.}$, $P_{rit.}$, s), indicatifs du fonctionnement dudit circuit d'alimentation (C), et le stockage de données représentant la variation, dans le laps de temps ($\Delta t_{TOT}$), desdits signaux principaux ($Q_{man.}$, $T_{man.}$, $T_{rit.}$, $P_{man.}$, $P_{rit.}$, s), dans lequel lesdits signaux principaux ($Q_{man.}$, $T_{man.}$, $T_{rit.}$, $P_{man.}$, $P_{rit.}$, s) comprennent des signaux représentant les quantités physiques suivantes :
- le débit du fluide caloporteur s'écoulant dans une partie de distribution principale ($C_{man.}$) du circuit d'alimentation (C);
- une première et une deuxième température ($Q_{man.}$, $T_{rit.}$) du fluide caloporteur respectivement dans la partie de distribution principale ($C_{man.}$) et dans la partie de retour principale ($C_{rit..}$) du circuit d'alimentation (C);
- la configuration de fonctionnement (s) adoptée par le circuit d'alimentation (C); et
- la différence de pression ($\Delta P$) que présente le fluide caloporteur respectivement entre la partie de distribution principale et la partie de retour principale ($C_{rit.}$) du circuit d'alimentation (C);
- le traitement desdites données représentant la variation desdits signaux principaux ($Q_{man.}$, $T_{man.}$, $T_{rit.}$, $P_{man.}$, $P_{rit.}$, s) dans le laps de temps ($\Delta t_{TOT}$), pour délivrer à la sortie les données ($\hat{E}_{1,1}$, ..., $\hat{E}_{1,n1}$; $\hat{E}_{2,1}$, ..., $\hat{E}_{2,n2}$; ...; $\hat{E}_{m,1}$, ..., $\hat{E}_{m,nm}$) qui représentent la valeur estimée de l'énergie thermique ($E_{1,1}$, ..., $E_{1,n1}$; $E_{2,1}$, ..., $E_{2,n2}$; ...; $E_{m,1}$, ..., $E_{m,nm}$) échangée individuellement entre chaque dispositif échangeur de chaleur ($H_{1,1}$, ..., $H_{1,n1}$, $H_{2,1}$, ..., $H_{2,n2}$, ..., $H_{m,1}$, ..., $H_{m,nm}$) et l'utilisateur thermique ($U_1$, ..., $U_m$) correspondant,

**caractérisé en ce que**
le procédé comprend en outre une étape d'identification et de stockage d'un modèle dynamique thermique et fluide (M) représentant sur le plan structurel et topologique l'installation (I), sur la base de quantités physiques représentant le fonctionnement du circuit d'alimentation (C) et des dispositifs échangeurs de chaleur ($H_{1,1}$, ..., $H_{1,n1}$, $H_{2,1}$, ..., $H_{2,n2}$, ..., $H_{m,1}$, ..., $H_{m,nm}$), détecté dans des conditions spécifiées de fonctionnement et de stimulation de l'installation (I);
et **en ce que**
le traitement desdites données est réalisé conformément au modèle dynamique thermique et fluide (M).

EP 2 376 884 B1

**FIG.1**

THERMAL INSTALLATION

$EV_{1,1},...,EV_{m,pm}$

$H_{1,1},...,H_{m,nm}$

USER COMPLEX — U

$E_1 = E_{1,1} + .... + E_{1,n1}$ — $U_1$

$E_m = E_{m,1} + .... + E_{m,nm}$ — $U_m$

G

P   C

12   14,16   18,20

Q   $T_{man}, T_{rit}$   $P_{man}, P_{rit}$   $S_1$ ... $S_p$

SYSTEM — 10

23

MEMORY

M

FIRST PROCESSING MODULE   24

24a

$\hat{Q}_{1,1},...\hat{Q}_{m,nm}$

$\Delta\hat{T}_{1,1},...,\Delta\hat{T}_{m,nm}$

SECOND PROCESSING MODULE   24   24b

22

$E_1 = E_{1,1} + .... + E_{1,n1}$

$E_m = E_{m,1} + .... + E_{m,nm}$

IDENTIFICATION MODULE

28

CHARACTERISTIC PARAMETERS

STRUCTURAL INFORMATION

CONTROL UNIT

FIG.2

EP 2 376 884 B1

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3012267
- EP 0844468 A
- WO 0360448 A
- US 4509679 A